# EUROPEAN PATENT SPECIFICATION

(11) **EP 2 260 620 B1**
(45) Date of publication and mention of the grant of the patent: **03.02.2016**
(21) Application number: 09709770.3
(22) Date of filing: 09.02.2009
(51) Int. Cl.: H04L 12/751, H04L 12/705, H04L 12/711, H04L 12/703, H04L 12/723, H04L 12/707

(54) **CONSTRUCTING REPAIR PATHS AROUND MULTIPLE NON-AVAILABLE LINKS IN A DATA COMMUNICATIONS NETWORK**
KONSTRUKTION VON REPARATURPFADEN UM MEHRERE NICHTVERFÜGBARE STRECKEN HERUM IN EINEM DATENKOMMUNIKATIONSNETZ
CONSTRUCTION DE CHEMINS DE RÉPARATION AUTOUR D UNE PLURALITÉ DE LIENS NON DISPONIBLES DANS UN RÉSEAU DE COMMUNICATIONS DE DONNÉES

(30) Priority: 15.02.2008 US 32274
(43) Date of publication of application: 15.12.2010
(73) Proprietor: Cisco Technology, Inc., San Jose, CA 95134 (US)
(72) Inventor: BRYANT, Stewart Frederick, Reading RG2 6GB (GB); SHAND, Ian Michael Charles, Reading RG2 6GB (GB)
(74) Representative: Kazi, Ilya
(86) International application number: PCT/US2009/033601
(87) International publication number: WO 2009/102673

(56) References cited:
- US-A1- 2005 111 349
- US-A1- 2006 187 819
- BRYANT INTERNET DRAFT M SHAND S PREVIDI CISCO SYSTEMS S: "IP Fast Reroute Using Not-via Addresses; draft-ietf-rtgwg-ipfrr-notvi a-addresses-01.txt" IETF STANDARD-WORKING-DRAFT, INTERNET ENGINEERING TASK FORCE, IETF, CH, vol. rtgwg, no. 1, 1 July 2007 (2007-07-01), XP015051639 ISSN: 0000-0004
- ATLAS A ET AL: "Basic Specification for IP Fast-Reroute: Loop-free Alternates; draft-ietf-rtgwg-ipfrr-spec-base-06.txt" IETF STANDARD-WORKING-DRAFT, INTERNET ENGINEERING TASK FORCE, IETF, CH, vol. rtgwg, no. 6, 1 March 2007 (2007-03-01), XP015049793 ISSN: 0000-0004
- BRYANT INTERNET DRAFT M SHAND CISCO SYSTEMS S: "A Framework for Loop-free Convergence; draft-ietf-rtgwg-lf-conv-frmwk 01.txt" IETF STANDARD-WORKING-DRAFT, INTERNET ENGINEERING TASK FORCE, IETF, CH, vol. rtgwg, no. 1, 1 June 2007 (2007-06-01), XP015051643 ISSN: 0000-0004

## Description

### FIELD OF THE INVENTION

The present disclosure generally relates to data communication networks. The invention relates more specifically to constructing repair paths around multiple non-available links in a data communications network.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

In computer networks such as the Internet, packets of data are sent from a source to a destination via a network of elements including links (communication paths such as telephone or optical lines) and nodes (for example, routers directing the packet along one or more of a plurality of links connected to it) according to one of various routing protocols.

One class of routing protocol is the link state protocol. The link state protocol relies on a routing algorithm resident at each node. Each node on the network advertises, throughout the network, links to neighboring nodes and provides a cost associated with each link, which can be based on any appropriate metric such as link bandwidth or delay and is typically expressed as an integer value. Based on the advertised information in the form of a link state packet (LSP) each node constructs a link state database (LSDB), for which a map of the entire network topology can be constructed, and from that constructs generally a single optimum route to each available node based on an appropriate algorithm such as, for example, a shortest path first (SPF) algorithm. As a result a "spanning tree" (SPT) is constructed, rooted at the node and showing an optimum path including intermediate nodes to each available destination node. The results of the SPF are stored in a routing information base (RIB) and based on these results the forwarding information base (FIB) or forwarding table is updated to control forwarding of packets appropriately. When there is a network change an LSP representing the change is flooded through the network by each node adjacent the change, each node receiving the LSP sending it to each adjacent node.

In normal forwarding each node decides, irrespective of the node from which it received a packet, the next node to which the packet should be forwarded. In some instances this can give rise to a "loop". In particular this can occur when the databases (and corresponding forwarding information) are temporarily de- synchronized during a routing transition, that is, where because of a change in the network, a new LSP is propagated that induces creating a loop in the RIB or FIB. This can continue for as long as the loop remains although usually the packet will have a maximum hop count after which it will be discarded. Such a loop can be a direct loop between two nodes or an indirect loop around a circuit of nodes.

In some networks, two or more links are logically associated in a shared risk link group (SRLG). If a first link in an SRLG fails, all other links in the SRLG are considered to be failed as well, in determining a repair path around the first failed link.

US 2005/111349 discloses a method for performing a shortest path first network routing path determination in a data communications network based in part on information about links that are associated as shared risk link groups. Micro-loops are avoided in computing shortest path first trees by considering whether links are within shared risk link groups. As disclosed in The Internet Draft publication <draft-ietf rtgwg-ipfrr-spec-base-06.txt>, also entitled *Basic Specification for IP Fast-Reroute: Loop-free Alternates,* by Atlas et al, which is available through the IETF, IP fast re-routing (IPFRR) is an initiative in the Internet Engineering Task Force to develop techniques for rapidly constructing repair paths around a failed link, a failed node, or a predictable failure of an SRLG. However, known solutions do not provide protection against the failure of multiple links at approximately the same time where the links are not members of a known SRLG. A particular problem in this context is that the repair for one of the links may attempt to traverse the second failure. If the repair for that failure happens to traverse the first link, then a looping repair path results, which cannot deliver the packets to their destination. To avoid this problem, as is known from The Internet Draft publication <draft-ietf-rtgwg-ipfrr-notvia-addresses-01.txt>, also entitled *IP Fast Reroute Using Not-via Addresses,* by Bryant et al, which is available through the IETF, not- via IPFRR approaches specifically forbid the repair of an already repaired packet in order to prevent such loops. However, this constraint only reduces the collateral damage caused by the loop, and does not of itself allow the packet to be delivered to its destination.

### BRIEF DESCRIPTION OF THE DRAWINGS

The present invention is illustrated by way of example, and not by way of limitation, in the figures of the accompanying drawings and in which like reference numerals refer to similar elements and in which:
HG. 1 illustrates a network;
FIG. 2 is a flow diagram of a process of constructing repair paths for use when multiple links in a data communications network fail simultaneously;
FIG. 3 is a flow diagram of a process of dropping traffic and triggering convergence when multiple links in a data communications network fail simultaneously;
FIG. 4 illustrates a network having mutually looping repair paths;
FIG. 5 is a block diagram that illustrates a computer system upon which a method for constructing a repair path may be implemented.

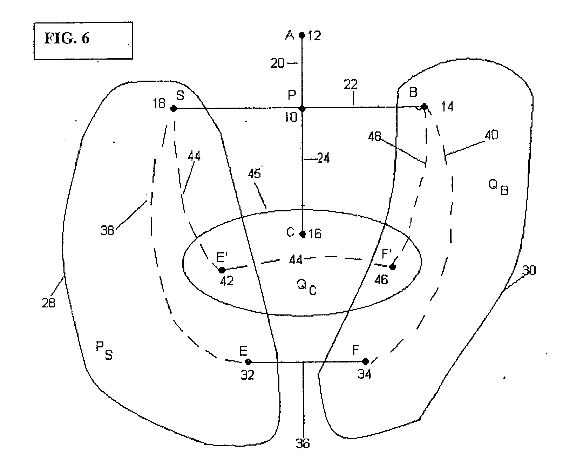

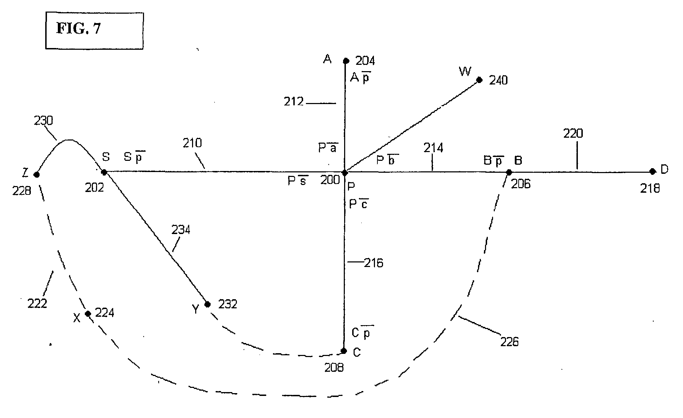

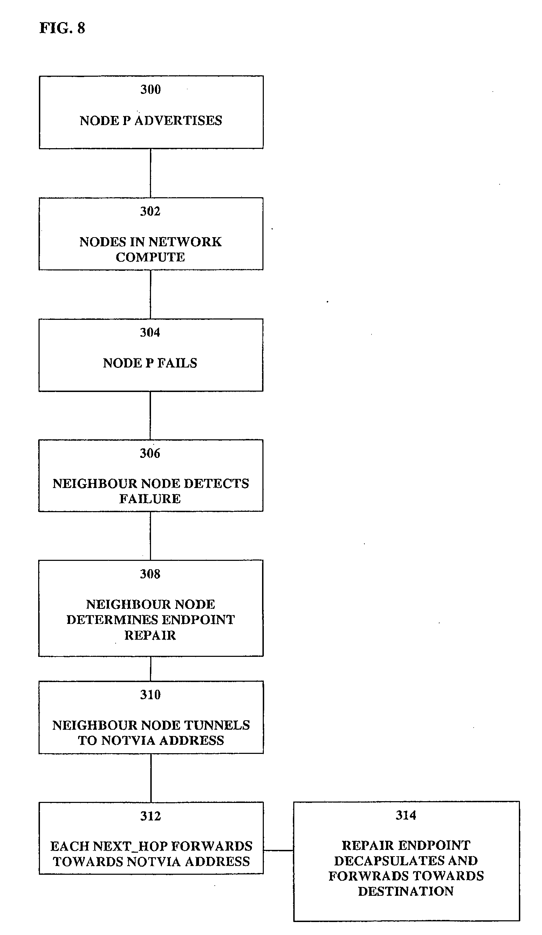

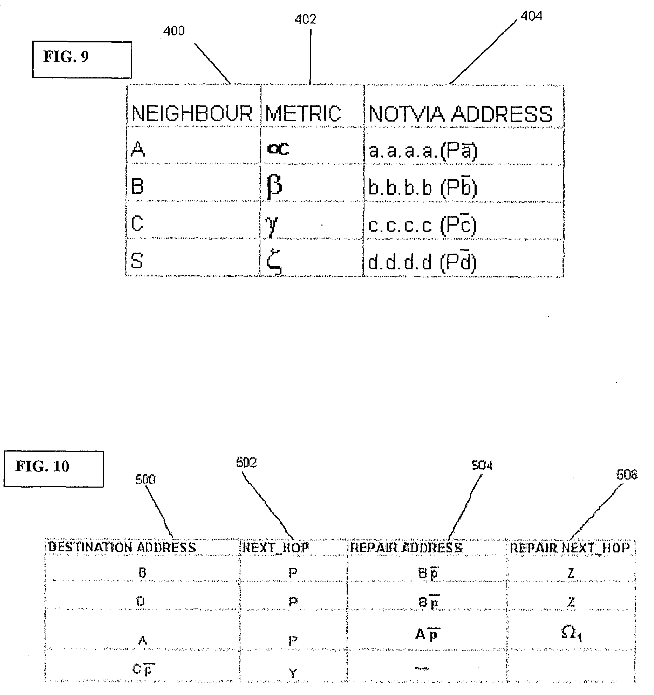

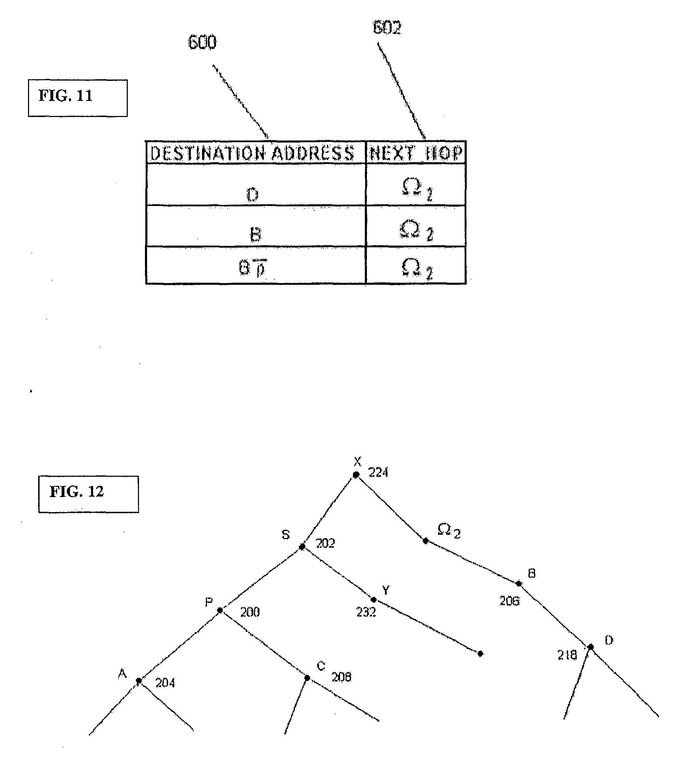

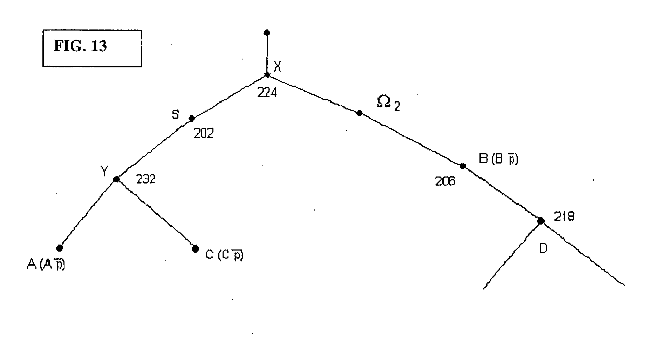

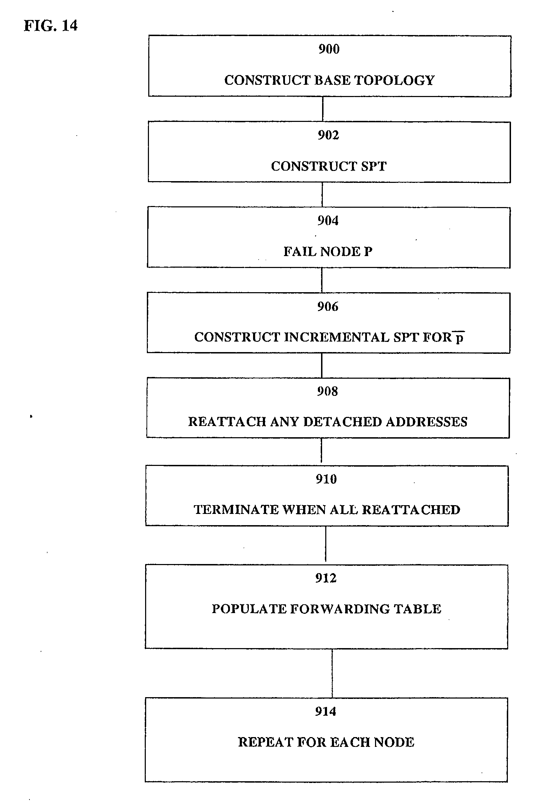

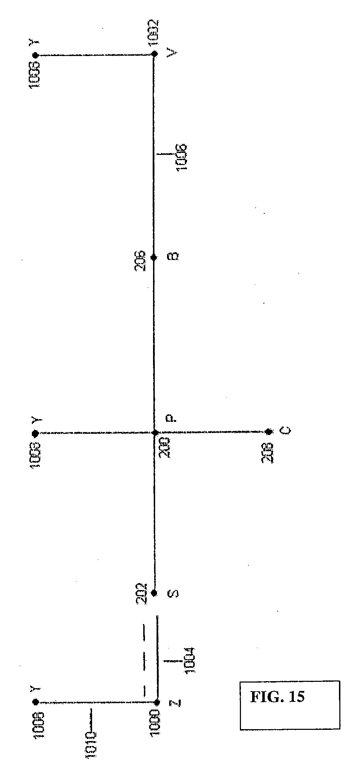

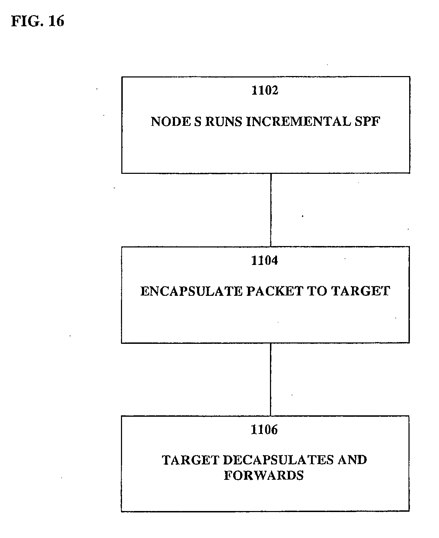

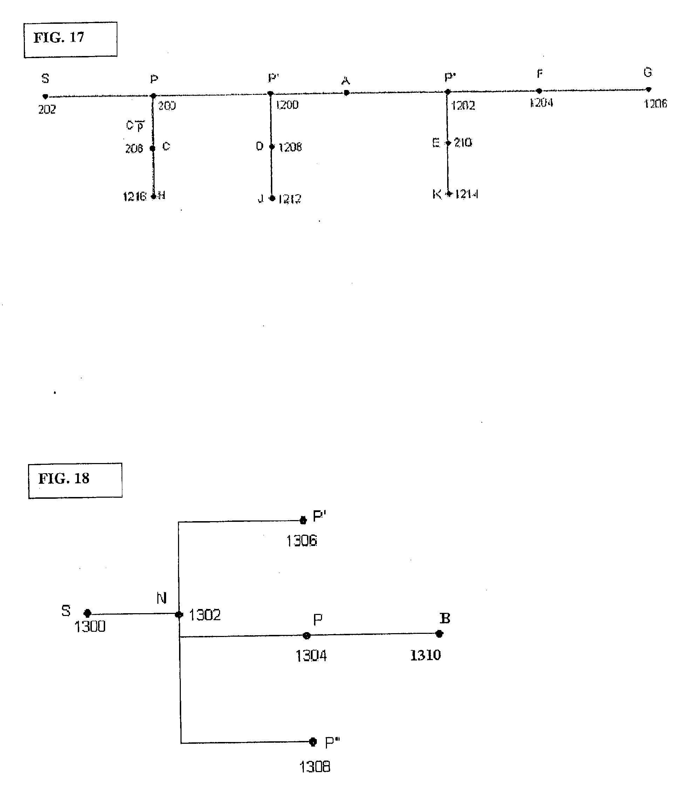

FIG. 6 is a representation of a network illustrating a method of constructing a repair path according to known approaches; FIG. 7 is a representation of a network illustrating a method of constructing a repair path according to the present approach; FIG. 8 is a flow diagram illustrating a method of constructing a repair path according to the present approach; FIG. 9 is a schematic representation of information carried in an LSP according to the present approach; FIG. 10 is a diagram illustrating a forwarding table constructed at a neighbor node to a non-available node; FIG. 11 is a diagram illustrating a forwarding table constructed at a non-neighbor node to non-available node; FIG. 12 is a spanning tree diagram for a node implementing a method of constructing a repair path; FIG. 13 is an incrementally changed spanning tree diagram for a node implementing a method of constructing a repair path; FIG. 14 is a flow diagram illustrating a method of constructing a repair path using incremental SPF; FIG. 15 is a representation of a network illustrating further implementations of the present approach; FIG. 16 is a flow diagram illustrating a method of constructing a repair path for an MHP; FIG. 17 is a representation of a network illustrating further implementations of the present approach; FIG. 18 is a representation of a network illustrating further implementations of the present approach.

### DETAILED DESCRIPTION OF THE PREFERRED EMBODIMENT

A method and apparatus for constructing a repair path around a non-available component in a data communications network is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

### 1.0 GENERAL OVERVIEW

The needs identified in the foregoing Background, and other needs and objects that will become apparent for the following description, are achieved in the present invention, which comprises, in one aspect, a data processing apparatus operable in a network as a first network node and comprising one or more processors; a network interface communicatively coupled to the one or more processors and configured to communicate one or more packet flows among the one or more processors in the network; memory coupled to the processors and comprising a forwarding information base (FIB) for a routing protocol; logic coupled to the one or more processors and comprising one or more stored sequences of instructions which, when executed by one or more processors, cause the one or more processors to perform: initiating a not-via approach for creating and storing repair path information for a first link between the first network node and a second network node; creating and storing a list of other network nodes that the not-via repair path traverses; creating and storing entries in the FIB identifying repair addresses for the network nodes and that cause (a) packets directed to all addresses normally reachable through the first link to be encapsulated to the second node not via the first node, (b) packets directed to a not-via address that is normally reachable through the first link to be encapsulated to the second node not via the first node, and (c) dropping packets directed to a not-via address that is normally reachable through the first link when the not-via address is in the list; repeating the preceding steps for all other links of the first network node.

Embodiments are capable of constructing one or more repair paths around multiple non-available links in a data communications network.

In an embodiment, the logic further comprises instructions which when executed cause the one or more processors to perform: determining from entries in the FIB one or more pairs of mutually incompatible link failures; advertising the one or more pairs as secondary shared risk link groups, using the routing protocol.

In an embodiment, the logic further comprises instructions which when executed cause sending network traffic destined for a repair address via a corresponding repair path.

In an embodiment, the logic further comprises instructions which when executed cause: determining that a simultaneous failure of the first link and a second link has occurred; determining that a first repair path for the first link traverses the second link, and that a second repair path for the second link traverses the first link; determining that a packet drop count is greater than a specified threshold value, that a hold-down step is in use with respect to re-convergence, and that a loop-free convergence mechanism is in use; in response to the ultimate determining step, sending an "Abandon All Hope" notification to logic implementing the routing protocol for forcing normal re-convergence to begin.

In an embodiment, the logic further comprises instructions which when executed cause: receiving, from a second node, a border gateway protocol (BGP) advertisement of a first not-via address with a path vector; determining a list of links for a repair path to the received not-via address; receiving one or more other BGP advertisements of other not-via addresses with path vectors; determining that a repair path for a link is mutually looping, based on the path vectors; inserting in the FIB a drop repair entry for the first not-via address.

In an embodiment, the first network node comprises a neighbor node, acting as a repairing node, and the logic further comprises instructions which when executed cause the repairing node to identify, for a destination address of the second network node, a repair address as an encapsulation repair endpoint for a repair to the destination address in the event of non-availability of the second network node.

In an embodiment, the network includes multi-homed prefixes and the logic further comprises instructions which when executed cause determining if an attachment point to a multi-homed prefix is reachable without a repair path and encapsulating a packet to the attachment point if so; and if an attachment point to the multi-homed prefix is only reachable via a repair path, encapsulating traffic to the corresponding repair address.

In an embodiment, the routing protocol is any of a link state routing protocol, MPLS routing protocol or distance vector routing protocol.

In an embodiment, the first link is in a shared risk link group.

In an embodiment, the logic further comprises instructions which when executed cause decapsulating the packets at a preceding node to one of the repair addresses. In an embodiment, the packets comprise multi-cast traffic.

In other aspects, the invention encompasses a computer-implemented method and a computer-readable medium configured to implement the functions described herein.

### 2.0 STRUCTURAL AND FUNCTIONAL OVERVIEW

### 2.1 REPAIR OF MULTIPLE UNRELATED LINK FAILURES USING NOT-VIA

A method and apparatus for constructing a repair path around a non-available component in a data communications network, using a "not-via" approach, is described in U.S. Patent Application Publication No. 20060187819, authored by the inventors named in this patent document. In the not-via approach of Publication No. 20060187819, in addition to the standard addresses assigned to each node, each interface in the network is assigned an additional repair address termed the "not-via address." A packet addressed to a not-via address must be delivered to the router with that address not via the component implied by the not-via address; for example, not via the neighboring router on the interface to which that address is assigned. To repair a failure, a repairing node encapsulates the packet to the not-via address of the node interface on the far side of the failure. The nodes on the repair path then know to which node they must deliver the packet, and which network component they must avoid.

The description herein assumes an understanding of Publication No. 20060187819. In particular, the present document describes certain improvements to the approaches of Publication No. 20060187819, but does not repeat information that is already known in Publication No. 20060187819.

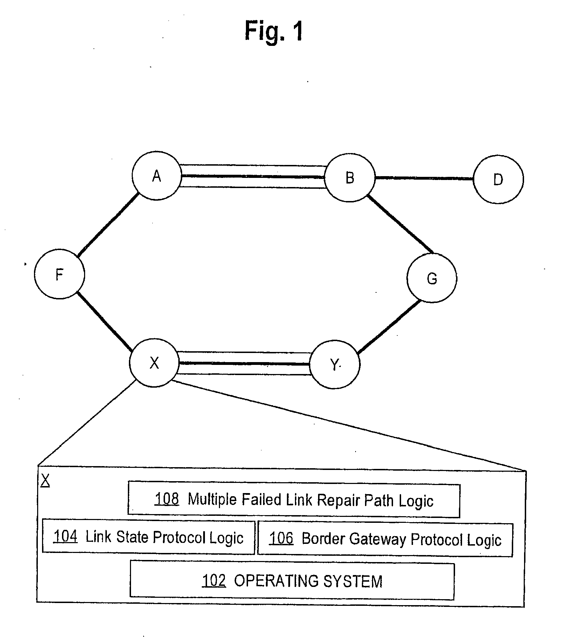

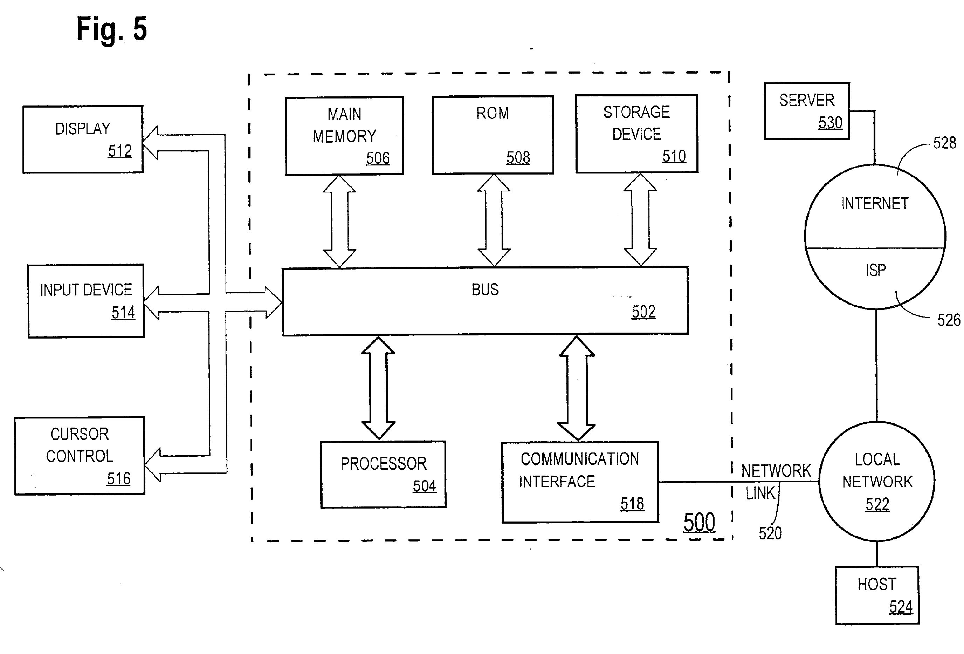

FIG. 1 is a diagram of a hypothetical network comprising nodes A, B, D, G, F, X, Y. For purposes of illustrating a clear example, seven nodes are shown in FIG. 1, but the techniques herein may be applied in any network of any size. Each node comprises a computing element such as a router or switch. Each of the nodes comprises a processor, a switching system, memory, and other hardware elements as further described herein for FIG. 5. Each of the nodes further comprises stored program control logic in the form of firmware, hardware, software, or a combination thereof that can implement the functions described herein.

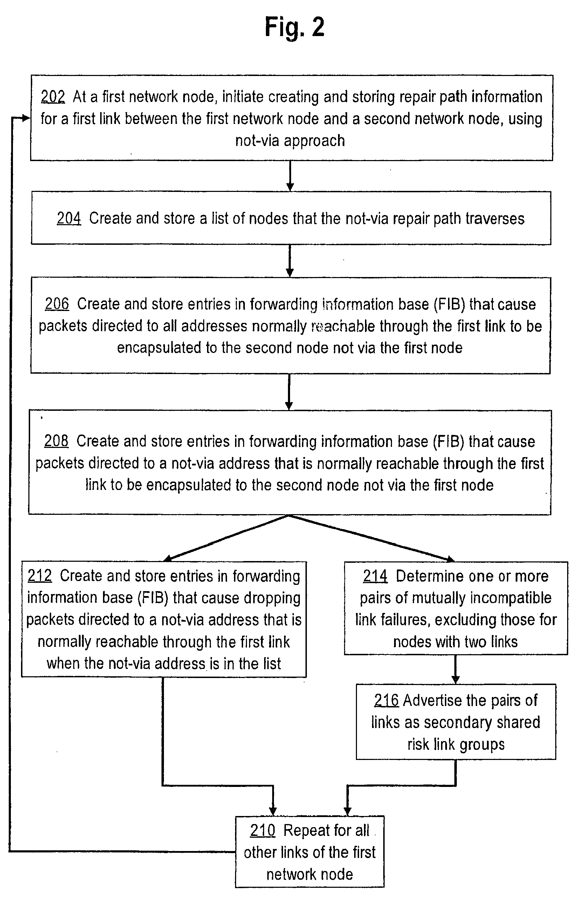

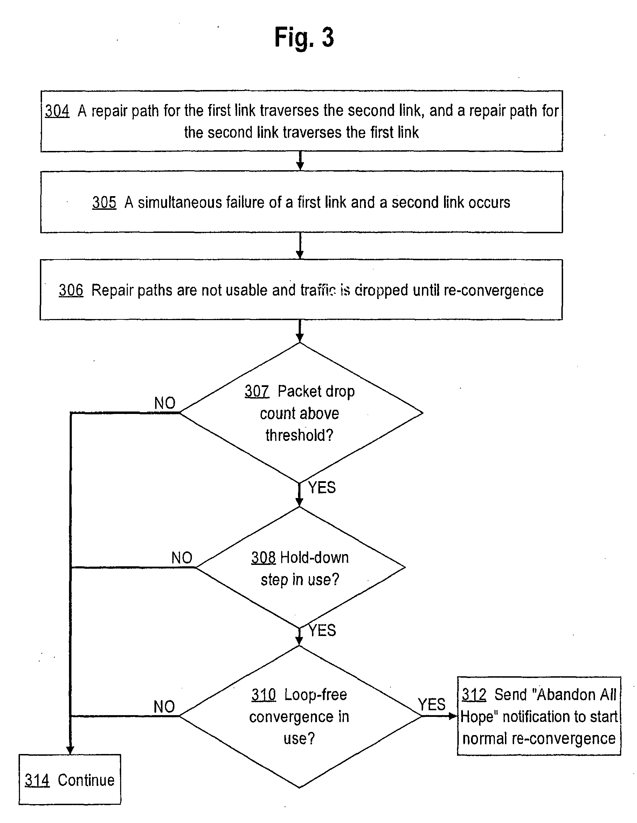

In an embodiment, each of the nodes A, B, D, G, F, X, Y comprises the functional units shown for node X in FIG. 1. In an embodiment, a node comprises an operating system 102, such as Cisco IOS Software from Cisco Systems, Inc., San Jose, California. The operating system 102 may host or control applications such as link state protocol logic 104, which implements a link state routing protocol, and may optionally host border control protocol (BGP) logic 106, which implements BGP, such as BGPv4 as defined in Internet Engineering Task Force (IETF) Request for Comments (RFC) 1771 and related RFCs. In an embodiment, a node further comprises multiple failed link repair path logic 108, which comprises firmware, hardware, software, or a combination thereof that can implement the functions described herein for FIG. 2, FIG. 3, and the functions described in other sections hereof. In an embodiment, the multiple failed link repair path logic 108 may be integrated into the link state protocol logic 104 or operating system 102. Aspects of certain functions described herein may be implemented in BGP logic 106. Further, all elements of node X shown in FIG. 1 may be integrated into a single unit of software, firmware, or a combination and separate blocks are shown in FIG. 1 solely to illustrate a clear example.

Links in FIG. 1 are described herein by connectivity to nodes; for example, link A-B is coupled to node A and node B. Links A-B and X-Y are protected, and all repairs are performed as not-via repairs according to the techniques of Publication No. 20060187819. Loop-free alternate (LFA) or downstream routes are also possible, and are discussed in other sections herein.

In the context of FIG. 1, three possible repair path scenarios may occur when two links fail at the same time:

1. The repair path for link A-B does not traverse link X-Y, and the repair path for link X-Y does not traverse link A-B. This case will not cause looping or packet loss.

2. The repair path for A-B traverses X-Y, but the repair path for X-Y does not traverse A-B. In a conventional not-via repair path approach, in operation, the repaired packet for failed link A-B would be dropped when it reached failed link X-Y, since repairs of repaired packets are forbidden in the approach of Publication No. 20060187819. However, if this packet were allowed to be repaired upon reaching X-Y, then no harm would be done, other than the possibility of double encapsulation that could cause the repaired packet to exceed the allowable maximum transmission unit (MTU) of the routing protocol. The effect of exceeding MTU is addressed in a subsequent section herein.

3. The repair for A-B traverses X-Y and the repair for X-Y traverses A-B. In this case, an unrestricted repair would result in packets looping in the network continuously with increasing levels of encapsulation. This behavior is undesirable and potentially harmful to the network.

In an embodiment, the multiple failed link repair path logic 108 in a node is configured to identify which of these cases exists, and to perform a not-via repair in a manner that achieves loop avoidance. For purposes of illustrating clear examples, FIG. 1 shows only nodes A, B, D, G, Y, X, and F, but the hypothetical network of FIG. 1 may include many other nodes and links that enable constructing effective repair paths around a mutual link failure of A-B and X-Y.

FIG. 2 is a flow diagram of a process of constructing repair paths for use when multiple links in a data communications network fail simultaneously.

In step 202, a first network node initiates creating and storing repair path information for a first link between the first network node and a second network node, using a not-via approach. For example, node A pre-computes a not-via repair path for link A-B, using the approach of Publication No. 20060187819. When node A is computing a not-via repair path for A-B, such as a path for traffic addressed to Ba, which is read as "B not-via A," node A is aware of the list of nodes which this path traverses. The list of nodes can be recorded during the SPF process, and the not-via addresses associated with each forward link can be determined. Referring again to FIG. 1, if the path is A, F, X, Y, G, B, then the list of not-via addresses is: Fa, Xf, Yx, Gy, Bg.

In step 204, a list of nodes that the not-via repair path traverses is created and stored. Storage, in step 204, may comprise transient storage in memory during the SPF process.

Under standard not-via operation as described in Publication No. 20060187819, A populates its forwarding information base (FIB) so that all addresses normally reachable via A-B are encapsulated to Ba when A-B fails, but all traffic to not-via addresses is dropped. According to an embodiment, any traffic for a not-via address normally reachable over A-B is also encapsulated to Ba unless the not-via address is one of those previously identified as on the path to Ba, for example Yx, in which case the packet is dropped.

Accordingly, as shown in steps 206, 208, and 212, the node creates and stores entries in its forwarding information base (FIB) that cause packets directed to all addresses normally reachable through the first links to be encapsulated to the second node not via the first node (step 206). The node also creates and stores FIB entries that cause packets directed to a not-via address that is normally reachable through the first link to be encapsulated to the second node not via the first node (step 208). At step 212 the node further creates and stores FIB entries that cause dropping packets directed to a not-via address that is normally reachable through the first link when the not-via address is in the list that was created at step 204. The preceding steps are repeated for all other links of the repairing node.

This approach allows performing a repair in all three cases identified above, while preventing a loop from occurring in the third case. In an embodiment, all required FIB entries are pre-computed, and therefore the approach does not require any detailed packet inspection. Nodes other than a repairing node simply forward packets based on FIB entries using conventional routing protocol operations; special repair markers, repair level indicators, counters, or other mechanisms are not necessary.

The present approach permits benign repairs to coexist, although in some cases the approach results in multiple encapsulations. Significant performance issues do not arise, because the two encapsulations or two decapsulations are normally performed at different nodes. The only potential issue is exceeding the allowed maximum transmission unit (MTU) in the network resulting from an increase in packet size due to multiple encapsulations.

However, in the third case, although the potentially looping traffic is dropped, the traffic is not repaired. If a hold-down step is applied before re-convergence, in case the link failure was just a short glitch, and if a loop-free convergence mechanism (such as ordered FIB convergence logic) further delays convergence, then the traffic will be dropped for an extended period. In an embodiment, additionally or as an alternative to the approach herein described in sections 2.2, special action is taken in response to expiration of a time-to-live value in a not-via packet. For example, in the looping scenarios described thus far, in the absence of special steps to drop looping not-via packets, a looping not-via packet will eventually result in expiration of a time-to-live value in the not-via packet when the not-via packet is not delivered to a destination node in time. In an embodiment, in these circumstances an "abandon all hope" (AAH) action is taken (or a message is sent within the routing protocol logic) to immediately invoke normal re-convergence. Under these circumstances, it is not sufficient to expedite the issuance of an LSP reporting the failure, since this may be treated as a permitted simultaneous failure by ordered FIB convergence logic; instead, it is necessary to trigger an AAH message to induce normal convergence. An ordered FIB AAH action can be triggered when a packet drop count on the not-via address has been incremented.

This approach is illustrated in FIG. 3. FIG. 3 is a flow diagram of a process of dropping traffic and triggering convergence when multiple links in a data communications network fail simultaneously. In step 304, a node has determined that a repair path for the first link traverses the second link, and a repair path for the second link traverses the first link, by pre-computing the repair paths as described above for FIG. 2. In step 305, a simultaneous failure of a first link and a second link occurs. This is the third scenario described above. As a result, the repair paths are not usable and certain traffic directed to addresses reachable over the links will be dropped until re-convergence occurs.

In an embodiment, in step 307, a node tests whether the packet drop count maintained in the node has exceeded a specified threshold. Such a test is performed to promptly detect whether traffic actually flowing is resulting in unacceptable packet loss and therefore is probably on mutually looping repair paths, and results in remedial action as soon as possible by invoking the AAH approach. This alternative has the benefit of resolving loops within the time required to traverse 256 hops, plus the time required to "back out" a repair so that any other node can break future loops.

A packet drop count is conventionally maintained by operating system 102 of a node and is accessible through an API call or a database lookup within the node. If the threshold has been exceeded, then the node checks whether a hold-down step is in use at step 308. Step 308 may be implemented in logic that does not actually perform a test but merely branches because the writer of the logic is aware that hold-down logic has been implemented. If a hold-down step is in use, then at step 310 the logic tests whether a loop-free convergence process is in use in the node. If so, then an "Abandon All Hope" notification is triggered, to discontinue the hold-down period and to force normal re-convergence. As a result of convergence, new network paths may be discovered that can allow the traffic to be forwarded rather than dropped. If any of the tests of steps 307, 308, 310 are false, processing continues at step 314.

Alternatively, the logic can wait until the LSP describing the change is issued normally, for example, when X announces the failure of X-Y. When the repairing node, which has pre-computed that X-Y failures are mutually incompatible with its own repairs, receives this LSP, then the repairing node can issue the AAH. This alternative approach has the disadvantage that it does not overcome the hold-down delay. However, the alternative approach requires no data-driven operation, and still has the required effect of abandoning the ordered FIB convergence process, which is probably the longer of the delays.

### 2.2 SECONDARY SHARED RISK LINK GROUPS

To address the third scenario, in an alternative embodiment, an alternative SRLG-like repair path is computed, rather than simply dropping the offending packets. In such an alternative approach, the mutually incompatible failures are identified and advertised as secondary SRLGs. Such links are then failed together when computing the repair paths for the affected not-via addresses, but not for normal addresses.

Referring again to FIG. 2, in the alternative approach, at step 214, after performing steps 202, 204, 206, 208, the node determines one or more pairs of mutually incompatible link failures, excluding those for nodes with two links. In step 216, the pairs of links are advertised as secondary shared risk link groups. This effectively removes the pairs of links from consideration, together, when the repair paths for affected not-via addresses are determined.

The general approach of FIG. 2, steps 202 to 212 to identify which not-via addresses should be dropped is conservative as an indicator of mutually incompatible failures, because some of the addresses dropped may never be used for a repair. While this issue does not arise in the example of FIG. 1, the approach of steps 214-216 can be used for other scenarios, and is conservative and only invokes SRLG computation when the repair paths are mutually incompatible.

For example, when node A has identified that the normal path for Yx is over A-B, so that the Yx packet should be dropped, node A performs a further check by running the SPF algorithm, rooted at X with X-Y removed, to determine if A-B is indeed on X's repair path for Yx. A-B may not be on that repair path, even though packets for Yx would traverse A-B because the complete sink tree is computed for Yx.

In an embodiment, the further check calculation appears to be order hk, where h is the average hop length of repair paths and k is the average number of neighbors of a router, but certain optimizations may be introduced. When A is computing a set of repair paths, A computes repair paths for all its k neighbors. For each neighbor, A determines a list of node pairs that are traversed by each repair path. Each list of node pairs may have one or more node pairs in common, so the actual number of link failures that require investigation is the union of the lists of node pairs. Node A then runs an SPF rooted at the first node of each pair-the first node is the root because the pairings are ordered representing the direction of the path-with the link to the second node removed. This SPF, while not an incremental, can be terminated as soon as the not-via address is reached.

For example, when running the SPF rooted at X, with the link X-Y removed, the SPF can be terminated when Yx is reached, and the resulting path is put into PATHS; it is a fundamental property of the SPF algorithm that once a node is placed in PATHS, the shortest path to it has been found. Once the path has been found, the path is checked to determine if it traverses any of A's links. Because the node pair XY may exist in the list for more than one of A's links, so that the node pair XY lies on more than one repair path, it is necessary to identify the correct list and link that has a mutually looping repair path. The identified link of A is then advertised by A as a secondary SRLG paired with the link X-Y. Because node X also will be running the same algorithm, node X will identify that XY is paired with AB and will so advertise it.

In an embodiment, a cross-check may be performed to verify the accurateness of the calculation. The ordering of the pairs in the lists is important. For example, the link XY and the link YX are considered separately.

If and only if the repairs are mutually incompatible, then the pair of links is advertised as a secondary SRLG. All nodes then compute repair paths around both failures, using an additional not-via address Bal(x-y), meaning B not-via A or the link X-Y.

Most mutually looping repair paths are caused by nodes with only two links, or sections of a network that are only bi-connected. In these cases, repair is clearly impossible; the failure of both links partitions the network. In an embodiment, such cases are identified to inhibit the fruitless advertisement of the secondary SRLG information. In an embodiment, identification is performed by a node that detects the requirement for a secondary SRLG first running the not-via computation with both links removed. If this process does not result in a path, then the network would be partitioned by such a failure, and therefore no advertisement is required or made.

Thus, in the approach herein each node performs a small amount of extra computation and then possibly advertises some secondary SRLG information, which then causes other nodes to re-compute their repair paths based on this information. An alternative approach is for all nodes to perform the computation on behalf of other nodes. This approach is possible because a node executing a link state protocol has access to full topology information within the relevant flooding scope of the routing domain. In this alternative, no additional flooding or "two phase" computation is required.

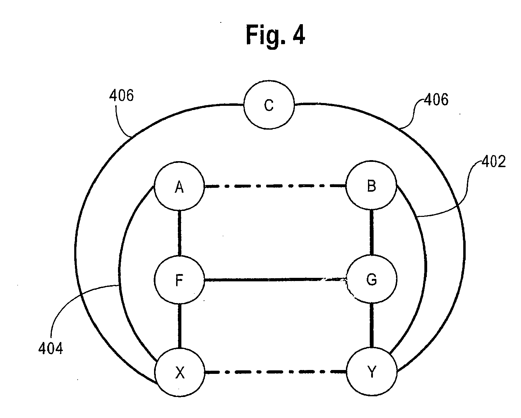

In an alternative embodiment, the SRLG approach herein also may be used to determine repair paths in network topologies in which multiple concurrent link failures result in multi-way loops. FIG. 4 illustrates a network topology in which multiple concurrent link failures result in a multi-way loop. A network comprises nodes A, B, F, G, X, Y, and C having links A-B, A-E, B-G, G-F, G-Y, X-Y, X-F, X-C, and C-Y. Corresponding links in the opposite direction are not enumerated herein for simplicity. Node A has computed A-X (404) as a repair path around A-B. Node B has computed B-Y (402) as a repair path around B-A. Node X has computed X-C-Y (406) as a repair path around X-Y. Node Y has computed Y-C-X as a repair path around Y-X. In this arrangement, when A-B and X-Y mutually fail, an infinite loop arises along the repair paths and the unaffected paths between the nodes in the interior of the topology. Further, placing A-B and X-Y in a secondary SRLG as described thus far is insufficient to remove the loop.

In an embodiment, multi-way loops caused by multiple mutual link failures may be addressed by extending the method of checking paths by running additional SPF calculations. In particular, a repairing node additionally determines another level of repair paths by performing an SPF rooted at each node that is known to be on a previously determined repair path. The repairing node also includes, in the list of nodes created at step 204 of FIG. 2 and used to install drop FIB entries at step 212 of the process of FIG. 2, all nodes on the additional repair paths if the repair paths include the repairing node.

In general, to address loops caused by mutual failure of three (3) links, the approach performs two levels of SPF calculations in addition to the original not-via computation. When four (4) links are involved, three levels are explored, and so forth. The process may repeat using recursive exploration to any number of desired levels, balanced against the availability of memory, processing resources, and time to perform the entire pre-computation. Further, when ever higher numbers of failures are considered in this process, the likelihood increases that actual failures would partition the network in a way that would prevent effective forwarding until at least one link repair is effected.

Additionally, the routing protocol logic may implement the "Abandon All Hope" process described above, in response to expiration of a TTL value, when a loop arises when N+1 links have mutually failed and repair paths have been computed as stated above only for N links. Thus, the "Abandon All Hope" approach can serve as a safety net and can balance against the cost of performing a large number of levels of SPF calculations.

As a result, loop protection is extended to three or more links by installing additional drop entries that will cause packets to be dropped, rather than to continuously loop, when a multi-way mutual loop is recognized.

### 2.3 LOOP FREE ALTERNATES AND DOWNSTREAM ROUTES

The preceding description has assumed that all repairs are not-via tunnels. However, embodiments may use loop free alternates (LFAs) or downstream routes where available. The use of LFAs or downstream routes complicates the approach herein because such use results in packets that are being repaired, but that are not addressed to not-via addresses.

If both links that have failed are using downstream routes, then there is no possibility of looping, since it is impossible to have a pair of nodes which are both downstream of each other. However, loops can occur when LFAs are used. An example is the well-known node repair problem with LFAs.

If one link is using a downstream route, while the other is using a not-via tunnel, the approach will work if the nodes on the path of the downstream route can be determined. Some methods of computing downstream routes do not provide this information. If information about the nodes on the path of the downstream route is available, then the link using a downstream route will have a discard FIB entry for the not-via address of the other link. Consequently, potentially looping packets will be discarded when they attempt to cross this link. Unlike the case in which two failed links use not-via repairs, in which the loop will be broken when a not-via packet first meets the second failure, the downstream routed packet will be repaired unconditionally, and the downstream routed packet will only be dropped when that packet is routed back to the first failure. That is, the downstream routed packet will execute a single turn of the loop before being dropped.

Further, with downstream routes, the path may be computed to the far side of the failure, but the packet may "peel off" to its destination before reaching the far side of the failure. In this case the packet may traverse some other link which has failed and was not accounted for on the computed path. For example, if the A-B repair is a downstream route and the X-Y repair is a not-via repair, then the X-Y repair packets encapsulated to Y_{X} follow a path that attempts to traverse A-B. If the A-B repair path for "normal" addresses is a downstream route, it cannot be assumed that the repair path for packets addressed to Y_{X} can be sent to the same neighbor. This is because the validity of a downstream route must be ascertained in the topology represented by Y_{X}, which is with the link X-Y failed. This topology is not the same as that used for the normal downstream calculation, and use of the normal downstream route for the encapsulated packets may result in an undetected loop.

If it is computationally feasible to check the downstream route in this topology (in an embodiment, for any not-via address Q_{P} which traverses A-B, a node performs the downstream calculation for that not-via address in the topology with Q-P failed), then the downstream repair for Y_{X} can safely be used. These packets cannot re-visit X-Y, since by definition such packets will avoid that link.

Alternatively, such packets can be repaired in a not-via tunnel. For example, even though the normal repair for traffic traversing A-B would be to use a downstream route, an embodiment may require that such traffic addressed to a not-via address must use a tunnel to B_{A}, by installing such a tunnel as a route for traffic addressed to the not-via address. Such a tunnel would only be installed for an address Q_{P} if it were established that it did not traverse Q-P, using the rules described above.

In any of the foregoing embodiments, routing protocol type-length-value (TLV) elements may be used to advertise the repair paths that are constructed or to advertise paths to avoid. Additionally or alternatively, advertisements may specify that nodes need to construct a not-via repair path around specified links. For example, an advertisement could announce the need to construct a not-via repair path around a list of one or more links that are named, identified by endpoint nodes, or otherwise identified. As another example, such an advertisement could additionally include one possible repair path, in which case a receiving node could determine that the receiving node is on that repair path and therefore the receiving node should perform a calculation of another repair path. As yet another example, such an advertisement could trigger a receiving node to enter a specified repair path in its FIB, effectively forcing a receiving node to update its routing table in a specified way.

### 3.0 IMPLEMENTATION MECHANISMS -- HARDWARE OVERVIEW

FIG. 5 is a block diagram that illustrates a computer system 140 upon which the method may be implemented. The method is implemented using one or more computer programs running on a network element such as a router device. Thus, in this embodiment, the computer system 140 is a router.

Computer system 140 includes a bus 142 or other communication mechanism for communicating information, and a processor 144 coupled with bus 142 for processing information. Computer system 140 also includes a main memory 146, such as a random access memory (RAM), flash memory, or other dynamic storage device, coupled to bus 142 for storing information and instructions to be executed by processor 144. Main memory 146 may also be used for storing temporary variables or other intermediate information during execution of instructions to be executed by processor 144. Computer system 140 further includes a read only memory (ROM) 148 or other static storage device coupled to bus 142 for storing static information and instructions for processor 144. A storage device 150, such as a magnetic disk, flash memory or optical disk, is provided and coupled to bus 142 for storing information and instructions.

A communication interface 158 may be coupled to bus 142 for communicating information and command selections to processor 144. Interface 158 is a conventional serial interface such as an RS-232 or RS-422 interface. An external terminal 152 or other computer system connects to the computer system 140 and provides commands to it using the interface 158. Firmware or software running in the computer system 140 provides a terminal interface or character-based command interface so that external commands can be given to the computer system. Link 520 may couple communication interface 158 to a local network 522.

A switching system 156 is coupled to bus 142 and has an input interface 514 and a respective output interface 519 to external network elements. The external network elements may include a plurality of additional routers or a local network 522 coupled to one or more hosts or routers, or a global network such as the Internet having one or more servers. The switching system 156 switches information traffic arriving on the input interface to the output interface according to pre-determined protocols and conventions that are well known. For example, switching system 156, in cooperation with processor 144, can determine a destination of a packet of data arriving on the input interface and send it to the correct destination using the output interface. The destinations may include a host, server, other end stations, or other routing and switching devices in a local network or Internet.

The computer system 140 implements as a router acting as a participating node, repairing node or notifying node the above described method of forwarding data. The implementation is provided by computer system 140 in response to processor 144 executing one or more sequences of one or more instructions contained in main memory 146. Such instructions may be read into main memory 146 from another computer-readable medium, such as storage device 150. Execution of the sequences of instructions contained in main memory 146 causes processor 144 to perform the process steps described herein. One or more processors in a multi-processing arrangement may also be employed to execute the sequences of instructions contained in main memory 146. In alternative embodiments, hard-wired circuitry may be used in place of or in combination with software instructions to implement the method. Thus, embodiments are not limited to any specific combination of hardware circuitry and software.

The term "computer-readable medium" as used herein refers to any medium that participates in providing instructions to processor 144 for execution. Such a medium may take many forms, including but not limited to, non-volatile media, volatile media, and transmission media. Non-volatile media includes, for example, optical or magnetic disks, such as storage device 150. Volatile media includes dynamic memory, such as main memory 146. Transmission media includes coaxial cables, copper wire and fiber optics, including the wires that comprise bus 142. Transmission media can also take the form of wireless links such as acoustic or electromagnetic waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 144 for execution. For example, the instructions may initially be carried on a magnetic disk of a remote computer. The remote computer can load the instructions into its dynamic memory and send the instructions over a telephone line using a modem. A modem local to computer system 140 can receive the data on the telephone line and use an infrared transmitter to convert the data to an infrared signal. An infrared detector coupled to bus 142 can receive the data carried in the infrared signal and place the data on bus 142. Bus 142 carries the data to main memory 146, from which processor 144 retrieves and executes the instructions. The instructions received by main memory 146 may optionally be stored on storage device 150 either before or after execution by processor 144.

Interface 519 also may provide a two-way data communication coupling to a network link that is connected to a local network. For example, the interface 519 may be an integrated services digital network (ISDN) card or a modem to provide a data communication connection to a corresponding type of telephone line. As another example, the interface 519 may be a local area network (LAN) card to provide a data communication connection to a compatible LAN. Wireless links may also be implemented. In any such implementation, the interface 519 sends and receives electrical, electromagnetic or optical signals that carry digital data streams representing various types of information.

The network link typically provides data communication through one or more networks to other data devices. For example, the network link may provide a connection through a local network to a host computer or to data equipment operated by an Internet Service Provider (ISP) 526. The ISP 526 in turn provides data communication services through the world wide packet data communication network now commonly referred to as the "Internet" 528. The local network and the Internet both use electrical, electromagnetic or optical signals that carry digital data streams. The signals through the various networks and the signals on the network link and through the interface 519, which carry the digital data to and from computer system 140, are exemplary forms of carrier waves transporting the information.

Computer system 140 can send messages and receive data, including program code, through the network(s), network link and interface 519. In the Internet example, a server might transmit a requested code for an application program through the Internet, ISP, local network and communication interface. One such downloaded application provides for the method as described herein.

The received code may be executed by processor 144 as it is received, and/or stored in storage device 150, or other non-volatile storage for later execution. In this manner, computer system 140 may obtain application code in the form of a carrier wave.

### 4.0 EXTENSIONS AND ALTERNATIVES

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

Any appropriate routing protocol and mechanism and forwarding paradigm can be adopted to implement the invention. The method steps set out can be carried out in any appropriate order and aspects from the examples and embodiments described juxtaposed or interchanged as appropriate. For example the method can be implemented using link state protocols such as intermediate system-intermediate system (IS-IS) or open shortest path first (OSPF), or routing vector protocols and any forwarding paradigm, for example MPLS. The method can be applied in any network of any topology and in relation to any component change in the network for example a link or node failure, or the introduction or removal of a network component by an administrator.

### REPRODUCTION OF CONTENTS OF PUBLICATION NO. 20060187819

In computer networks such as the Internet, packets of data are sent from a source to a destination via a network of elements including links (communication paths such as telephone or optical lines) and nodes (for example, routers directing the packet along one or more of a plurality of links connected to it) according to one of various routing protocols.

One class of routing protocol is the link state protocol. The link state protocol relies on a routing algorithm resident at each node. Each node on the network advertises, throughout the network, links to neighboring nodes and provides a cost associated with each link, which can be based on any appropriate metric such as link bandwidth or delay and is typically expressed as an integer value. A link may have an asymmetric cost, that is, the cost in the direction AB along a link may be different from the cost in a direction BA. Based on the advertised information in the form of a link state packet (LSP) each node constructs a link state database (LSDB), which is a map of the entire network topology, and from that constructs generally a single optimum route to each available node based on an appropriate algorithm such as, for example, a shortest path first (SPF) algorithm. As a result a "spanning tree" (SPT) is constructed, rooted at the node and showing an optimum path including intermediate nodes to each available destination node. The results of the SPF are stored in a routing information base (RIB) and based on these results the forwarding information base (FIB) or forwarding table is updated to control forwarding of packets appropriately. When there is a network change an LSP representing the change is flooded through the network by each node adjacent the change, each node receiving the LSP sending it to each adjacent node.

As a result, when a data packet for a destination node arrives at a node the node identifies the optimum route to that destination and forwards the packet to the next node ("NEXT_HOP") along that route. The next node repeats this step and so forth.

It will be noted that in normal forwarding each node decides, irrespective of the node from which it received a packet, the next node to which the packet should be forwarded. In some instances this can give rise to a "loop". In particular this can occur when the databases (and corresponding forwarding information) are temporarily desynchronized during a routing transition, that is, where because of a change in the network, a new LSP is propagated that induces creating a loop in the RIB or FIB. As an example, if node A sends a packet to node Z via node B, comprising the optimum route according to its SPF, a situation can arise where node B, according to its SPF determines that the best route to node Z is via node A and sends the packet back. This can continue for as long as the loop remains although usually the packet will have a maximum hop count after which it will be discarded. Such a loop can be a direct loop between two nodes or an indirect loop around a circuit of nodes.

One solution that has been proposed to the looping problem is described in US patent application Ser. No. 10/340,371 US Publication No. 2007/038767, filed 9 January 2003, entitled "Method and Apparatus for Constructing a Backup Route in a Data Communications Network" of Kevin Miles et al., *("Miles et al. ")*, the entire contents of which are
discussed in more detail below. According to the solution put forward in Miles et al, where a repairing node detects failure of an adjacent component, then the repairing node computes a first set of nodes comprising the set of all nodes reachable according to its protocol other than nodes reachable by traversing the failed component. The repairing node then computes a second set of nodes comprising the set of all nodes from which a target node is reachable without traversing the failed component. The method then determines whether any intermediate nodes exist in the intersection between the first and second sets of nodes or a one-hop extension thereof and tunnels packets for the target node to a tunnel end point comprising a node in the intersection of the first and second sets of nodes.

The solution described in *Miles et al* can be further understood with reference to FIG. 6 which depicts an illustrative network diagram to which the solution is applied. A network includes a node P, reference numeral 10 to which nodes A, B, C and S, reference numerals 12, 14, 16, 18, are attached via respective links 20, 22, 24, 26. In the event of failure of node P, node S, acting as a repairing node, computes a first set of nodes reachable other than by the failed component, termed here node S's P-space, P_{S} reference numeral 28. Node S also computes the nodes from which a target node B is reachable without traversing node P, termed here node B's Q-space B_{Q} reference numeral 30. The repairing node, node S, then identifies that node E in P_{S} and node F in Q_{B}, reference numerals 32, 34, are within one hop of each other via link 36. Node S then tunnels packets to node E via path 38, that is to say, node S encapsulates a packet and attaches, as a destination header, the address of node E. In order for the packet to traverse link 36, node S also adds a "direct forwarding" instruction to the encapsulated packet such that node E, upon decapsulating the packet forwards to node F irrespective of its next hop to node B. Once the packet reaches node F then, by definition, it will reach node B, via path 40 in node B's Q space Q_{B}.

An extension of the approach is described in co-pending patent application Ser. No. 10/976,076 US Publication No. 2006/087965 filed 27th October 2004, entitled "Method and Apparatus for Forwarding Data in a Data Communications Network" of George Swallow et al ("*Swallow et al*"). According to this extension, the repairing node further calculates the Q-space of the other neighbors to the failed node, forming an "extended Q-space" and forwards the packet to a node in the intersection of P-space P_{S} and the extended Q-space. Referring once again to FIG. 6, for example, the repairing node, node S identifies that the node E', reference numeral 42 is reachable via a path 44 and lies in C's Q-space Q_{C}, reference numeral 45. The packet is then forwarded across Q-space Q_{C} via path 44 to a node F', reference numeral 46, which also falls in B's Q-space Q_{B} and from which it is forwarded to node B via path 48.

The approach in *Miles et al* and *Swallow et al* can be implemented both for node and link failure. In the case of link failure, solutions are proposed to avoid looping between the repairing node and neighbors of the node connected to the repairing node via the failed link and which may be implementing a conflicting repair strategy, that is to say between node S and nodes A, B and C in FIG. 6 in the event of failure of link 26.

One such solution is described in co-pending patent application Ser No. 10/346,051 US Patent No. 7 869 350, filed 15th January 2003, entitled "Method and Apparatus for Determining a Data Communication Network Repair Strategy" of Michael Shand et al ("*Shand et al*"). According to this approach a repairing node sends a probe packet along a repair path and, if the probe is returned, a loop is identified. A further solution is described in co-pending patent application Ser. No. 10/848,669 US Patent No. 7 042 838, filed 18th May 2004, entitled "Method and Apparatus for Forwarding Data in a Data Communications Network" of Michael Shand et al ("*Shand et al II*"). According to the approach described in *Shand et all II* a repair packet is marked as repaired to avoid looping.

Whilst such systems provide rapid network recovery in the event of a failed component the use of P and Q-space means that in many instances the repair path selected is not the shortest available repair path. Furthermore additional forwarding mechanisms such as directed forwarding are required in some instances. Yet further additional layers of encapsulation are required in certain instances, for instance in the case of use of extended Q-space or for instances such as multi-homed prefixes (MHP). Multiple encapsulation is undesirable for example because of the requirement for additional checksum calculations.

Many of these problems arise because, when a link or a router fails, only the neighbors of the failure are initially aware that the failure has occurred. According to the solution described above the failure is repaired by the routers that are the neighbors of the failure. These repairing routers have to steer packets to their destinations despite the fact that most other routers in the network are unaware of the nature and location of the failure.

A further known approach is described in "Fast Re-route using Alternative Shortest Paths" which is available at the time of writing on the file "draft-tian-ffr-alt-shortest-path-01.txt" in the directory "pub/id" of the domain "watersprings.org" on the World Wide Web. According to the approach described in this document a repairing node and each of its next hops calculate alternative shortest paths as repair paths around potential neighbor node failures by identifying a termination point for packets in the event of such failure and calculating alternate shortest paths by removing the failed node from the link state database. However this approach requires construction of explicit paths using, for example, source routing to encode the path in the packet itself.

FIG. 6 is a representation of a network illustrating a method of constructing a repair path according to known approaches; FIG. 7 is a representation of a network illustrating a method of constructing a repair path according to the present approach; FIG. 8 is a flow diagram illustrating a method of constructing a repair path according to the present approach; FIG. 9 is a schematic representation of information carried in an LSP according to the present approach; FIG. 10 is a diagram illustrating a forwarding table constructed at a neighbor node to a non-available node; FIG. 11 is a diagram illustrating a forwarding table constructed at a non-neighbor node to non-available node; FIG. 12 is a spanning tree diagram for a node implementing a method of constructing a repair path; FIG. 13 is an incrementally changed spanning tree diagram for a node implementing a method of constructing a repair path; FIG. 14 is a flow diagram illustrating a method of constructing a repair path using incremental SPF; FIG. 15 is a representation of a network illustrating further implementations of the present approach; FIG. 16 is a flow diagram illustrating a method of constructing a repair path for an MHP; FIG. 17 is a representation of a network illustrating further implementations of the present approach; FIG. 18 is a representation of a network illustrating further implementations of the present approach.

In overview a method for constructing a repair path can be understood with reference to FIG. 7 which depicts an illustrative network diagram to which the method is applied. The network includes a primary node P, reference numeral 200, a source node S, and nodes, A, B and C, reference numerals 202, 204, 206, 208 each connected to node P via respective links 210, 212, 214, 216. A further node D, reference numeral 218 is connected to node B via link 220. In addition to the standard addresses assigned to each node, each interface in the network is assigned an additional repair address. This is termed here the "notvia address" although it will be appreciated that this term is arbitrary, descriptive and non-limiting. The semantics of a notvia address are that a packet addressed to a notvia address must be delivered to the router with that address, notvia the neighboring router on the interface to which that address is assigned.

For example the interfaces from node P to nodes S, A, B, C by respective links 210, 212, 214, 216, may have addresses P*^{a̅}* , P*^{b̅}*, P*^{c̅}* and P*^{s̅}*. Similarly the interfaces from nodes A, B, C and S to node P via links 212, 214, 216, 210 respectively in the opposite direction have addresses A*^{p̅}*, B*^{p̅}*, C*^{p̅}*, S*^{p̅}*.

To repair a failure, a repairing node, for example node S, encapsulates the packet to the notvia address of the node interface on the far side of the failure. The nodes on the repair path then know to which node they must deliver the packet, and which network component they must avoid.

Referring to FIG. 7, assuming that S has a packet for some destination D that it would normally send via P and B, and that S suspects that P has failed, S encapsulates the packet to B*^{p̅}*. The path from S to B*^{p̅}* is, according to the semantic the shortest path from S to B not going via P. If the network contains a path from S to B that does not transit router P, then the packet will be successfully delivered to B. For example the packet may be forwarded along path 222 to node X, 224, and then path 226 to node D. Because node X has calculated a repair path for B*^{p̅}* it will forward the encapsulated packet correctly. When the packet addressed to B*^{p̅}* arrives at B, B removes the encapsulation and forwards the repaired packet towards its final destination, node D.

This can be further understood with reference to FIG. 8 which is a flow diagram illustrating at a high level the method applied herein. In block 300 node P advertises, using a notification such as an LSP, its adjacencies A, B, C, S and its associated notvia addresses P*^{a̅}*, P*^{b̅}*, P*^{c̅}*, P*^{s̅}*. It will be appreciated that all other nodes, acting as notifying node will also issue similar LSPs. As a result not only can appropriate forwarding tables be constructed, but also notvia addresses are available for each node in the event that it fails or otherwise becomes a non-available node, in which case the notvia address can be used as the repair address. Accordingly, in block 302, all participating nodes compute their next hops not only for each normal (non-failed) address but also for each notvia address. As a result each node constructs a repair path around each other node in the network and stores it against the corresponding notvia address.

In the event that node P subsequently fails or otherwise becomes unavailable, in block 304, then in block 306 the neighbor nodes detect or are notified of the failure in any appropriate manner. Where a neighbor node subsequently receives a packet which it would have sent to the failed component as its next hop then, acting as a repairing node, it identifies a repair end point or target to which it must tunnel such a packet to reach its subsequent destination in block 308. In the example given above, the repairing node is node S, and repair end point is node B for a packet with destination D. In particular this is identified by the respective notvia address B*^{p̅}.* As a result the node S tunnels the packet along the repair path to B*^{p̅}* in block 310. In block 312 each next hop forwards the encapsulated packet towards the notvia address B*^{p̅}*, for example node X in FIG. 7 forwards the packet correctly. Because all of the participating nodes have calculated a path to the notvia address using the same repair topology, a packet is forwarded using normal IP forwarding without the requirement for extensions to the forwarding code. In block 314 the packet arrives at the repair end point which decapsulates it and forwards the original packet towards its destination, again using normal IP forwarding for destination D in the example described.

As a result only one level of encapsulation is needed and it is possible to repair any failure, for example even when a network is highly asymmetric, in which case the P/Q-space approach described in *Miles et al* may theoretically fail. Furthermore the shortest available path around the failure is implemented, again without the need for additional forwarding mechanisms such as directed forwarding.

As described in more detail below, the method described with reference to FIG. 8 is extremely robust and applicable to a wide range of common network configurations and requirements. For example the method can be applied to repair of failed nodes or failed links and can incorporate strategies for single points of failure, that is, where a node provides the only connectivity to a neighbor node or a segment of a network. The approach can also be applied in the case of multi-homed prefixes (MHP), shared risk groups (SRG), local area networks (LAN) and uni-cast and multi-cast packets. In addition the approach can be implemented using, for example multi-protocol label switching (MPLS) or distance vector techniques. Yet further the approach can be implemented in the case that a sub-set of all of the nodes of a network only are participating nodes enabled to construct repair paths according to the method.

Referring once again to FIG. 7, it will be seen that in order to allow each enabled node on the network to construct a repair topology for a failed network component (link or node) each node must advertise its notvia addresses as well as the other relevant information stored in its LSP. Referring to FIG. 9, which is a diagram showing schematically the information contained in an LSP issued by node P, it will be seen that in addition to advertisement of each neighbor and its associated metric (e.g. the cost associated with the respective link) further information is provided. For example where the neighbor information is provided in column 400 and the associated metric in column 402, in addition a notvia address for each neighbor is provided in column 404. The notvia address is associated with the respective neighbor such that the entry against neighbor A effectively designates P*^{a̅}*. As long as the semantic is recognized by nodes receiving the LSP then the notvia address itself can take the form of a standard IP address shown schematically here as a.a.a.a representing P*^{a̅}* and so forth. It will be seen that, as every node in the network provides similar information, each node can derive repair paths for every notvia address on the network.

As a result, referring once again to the example described with reference to FIG. 7 in which node S encapsulates a packet destined for node D to P*^{b̅}* in the event of failure of node P, every node more generally calculates the path it would use in the event of any possible node failure. Each node therefore fails every other router in the network, one at a time, and calculates its own best route to each of the neighbors of that node. In other words, again with reference to FIG. 7, some router X will consider each router in turn to be P, fail P, and then calculate its own route to each of the notvia P addresses advertised by the neighbors of P. i.e. X calculates its route to S*^{p̅}*, A*^{p̅} ,* B*^{p̅}* and C*^{p̅}*, in each case, notvia P.

Accordingly, referring to FIG. 10 which is a diagram illustrating relevant parts of the forwarding table derived at node S, it will be seen that for each address (column 500) the next hop (column 502) is derived, a notvia address (column 504) is designated and a corresponding repair address (column 506) is also implemented. For example where the destination is node B and the next hop is calculated as node P then, in addition, the repair address B*^{p̅}* to which the packet will be tunneled is stored together with the corresponding repair next hop. In this case this is the first hop along the path 222 from node S to node X in the example described above with reference to FIG. 7, indicated as node Z, reference numeral 228 along link 230 from node S. In the case of packets destined for node D, the normal next hop is node P and the repair address is B*^{p̅}* as a result of which the repair next hop is once again node Z for packets encapsulated to B*^{p̅}*. In the case of node A as destination address, the next hop is node P and the repair address is A*^{p̅}* providing some repair next hop Ω₁ (not shown). The repair addresses in node S's forwarding table will always be to a neighbour's neighbour, i.e., the repair tunnel endpoint. However it will be seen that where the normal address in column 500 is a notvia address, for example C*^{p̅}*, then although a next hop is provided as node Y, reference numeral 232 along link 234 from node S, a repair address and repair next hop are not provided as described in more detail below. As a result, node S will forward a packet using normal forwarding to a notvia address, when it lies in another node's repair path, but will not instigate a repair tunneled to a notvia address when the incoming packet is already destined for a notvia address.

It will be appreciated that the manner in which the correct repair address is identified in the event of failure of a next hop, for a given packet to a given destination, may be determined in any appropriate manner for example from the SPT constructed at the node and described, for example, in *Miles et al*. It will further be seen that the repair addresses are derived from all of the LSPs received and not necessarily from the node around which the repair is eventually formed. For example, referring once again to FIG. 10, in the case of a packet destined for node B, in the event of failure of next hop node P, the repair address is B*^{p̅}*, which will have been received from node B, not node P. Referring to FIG. 11, which is a diagram showing aspects of a forwarding table constructed at node X, it will be seen that a similar table is constructed including destination address field 600, next hop field 602, for simplicity the repair address field and repair next-hop field are not shown but these would be populated in the same manner as for node S described above. In the fragment shown it will be seen that the next hop for destination addresses B and D some node Ω₂ (not shown). The next hop for destination address B*^{p̅}* also happens to be Ω₂ in the topology shown as the shortest path to B and D does not change in the repair topology.

Conversely failure of node P may mean that node X's next hop for B*^{p̅}* changes as well. As a result, as described in more detail below, in some instances it is possible to reduce the SPF calculation overhead in instances where the change between the normal topology and the repair topology, i.e. where the failed component is excised from the repair topology, does not affect certain nodes.

Various possibilities exist for reducing the computation overhead and in particular ensuring that each node does not have to calculate an entire SPF for the failure of each other possible node. Firstly, if a node can identify that it will not be in a repair path from another node to a repair address then it does not need to calculate its next hop for that repair address. It will be noted that packets tunneled to a repair address will only originate from nodes repairing around a failed component, i.e. on the other side of the failed component from the repair address. Accordingly this can be achieved by signaling from the repairing node to each other node in its repair path for a given repair address in which case each node receiving the signal will calculate its own next hop for that repair address. Alternatively some form of "discovered" signaling route can be built up. For example where node S sends a packet to its repair next hop (for example node X), if that repair next hop has not constructed a repair path it will drop the packet but then calculate its own repair next hop. If S, under the control of a higher level protocol, resends the packet when no acknowledgement is received from the final_destination, node X will now forward the packet to its repair next hop which will also drop it but at the same time construct its own repair next hop. This process continues until the repair path is established at which point the acknowledgement will be sent.

According to a second manner of reducing the SPF calculation overhead, incremental SPFs can be implemented. This can be understood with reference to FIG. 12 which shows a partial SPT constructed at node X. X first calculates the base topology with all routers functional and determines its normal path to all node addresses. For example its next hop for nodes B and D is via Ω₂, its next hop for nodes P and Y is via node S (node Z is ignored here for the purposes of simplicity) and node S's next hop for nodes A and C is via node P.

Node X then fails router P and performs an incremental SPF. Incremental SPFs will be well known to the skilled reader and are not described in detail here but merely summarized for the purposes of explanation, referring to FIG. 13 which shows an incremental SPT. In particular it will be seen that node P has been excised from the repair topology as a result of which nodes A and C are re-attached to node Y but nodes B and D are unaffected. As a result the notvia addresses corresponding to *p̅* can be quickly calculated. Node X's next hop for A*^{p̅}* and C*^{p̅}* remains node S. However when node S recalculates its SPT it will instigate node Y as its repair next hop for A*^{p̅}* and C*^{p̅}*. Node X's next hop for nodes B and D are unaffected such that the next hop is Ω₂ for destinations B, D, and B*^{p̅}*.

As a result the incremental calculation can be terminated when all of the addresses previously reached via P are reattached. Node X then reverts to the base topology and repeats the process failing_each router in turn and deriving the notvia addresses accordingly. The algorithm is significantly less expensive than a set of full SPFs. In particular, although a router still has to calculate the repair path for N-1 failures, the computational effort is much less than N-1 SPFs.

The approach can be understood further with reference to FIG. 14 which is a flow diagram illustrating calculation of the SPFs. In block 900 node X constructs a base topology of all nodes in the network. In block 902 node X constructs a corresponding SPT. In block 904 node X fails a node P and in block 906 node X constructs an incremental SPT, excising node P from the repair topology for *^{p̅}*. In block 908 any detached notvia addresses are reattached together with any other nodes that must be reattached to allow reattachment of the notvia addresses and in block 910 the calculations terminate when all of the addresses are reattached. In block 912 the forwarding table is then populated with all of the next hops for notvia P addresses, e.g. A*^{p̅}*, B*^{p̅}*, C*^{p̅}* and so forth. In block 914 the procedure is repeated for every other participating node in the network.

It will be seen that the approach described herein can be applied both in the case of node or link failure. The discussion provided above is directed particularly to node failure, the construction of repair paths or notvia addresses being based around the node failure and SPTs derived accordingly. However it will be appreciated that, in a similar manner, the invention can be directed to link failure.

For example in the case of FIG. 7 node S and/or node P can additionally or alternatively advertise a notvia address based around the failure of link 210. In that case the notvia address would be advertised once again using an appropriate semantic such that receiving nodes recognized the type of address and the required calculations to obtain a link repair next hop. For example the incremental SPT approach described above with reference to FIGS. 12 to 14 would be based on a repair topology where, instead of removal of node P (and hence all links between node P and other nodes), only the link 210 between nodes S and P would be removed and the incremental SPT calculated.

Assuming link rather than node failure is of assistance where some destinations are only reachable through the failed router, it is desirable that an attempt be made to repair to those destinations by assuming that only a link failure has occurred, and using the notvia addresses calculated for node failure to attempt link repair.

To perform a link repair, S encapsulates to P*^{s̅}* (i.e. it instructs the network to deliver the packet to the node repair address P notvia S). All of the neighbors of S will have calculated a path to P*^{s̅}* in case S itself had failed. S could therefore give the packet to any of its neighbors (except, of course, P). However, S should preferably send the encapsulated packet on the shortest available path to P. This path is calculated by running an SPF with the link SP failed.

In the event that this link repair is attempted in the presence of node failure in which case other neighbors of the failed node could be running conflicting repair strategies then looping is avoided in a very simple manner. In particular as discussed above with reference to FIG. 10, it is ensured that a repair path is not provided for a notvia address. Referring to FIG. 7, if A were the neighbor of P that was on the link repair path from S to P, and P itself had failed, the repaired packet from S would arrive at A encapsulated to P*^{s̅}*. A would have detected that AP link had failed and would normally attempt to repair the packet. However, as no repair path is provided for P^{s̅}, A would be forced to drop the packet, thus preventing the formation of loops.

This approach is advantageous in the case, for example, of instances of single point of failure. Referring once again to FIG. 7, where node P provides the only connectivity to a node W reference numeral 240 when node W itself may provide connectivity with a segment of the network in addition, if node P fails then no node in the network can reach node W. Accordingly where node S detects failure at its interface to node P it may be desirable to assume that only the link 210 has failed rather than node P. As a result S encapsulates packets destined for node W to P*^{s̅}*. Although node S could theoretically send the packet to any of its neighbours it will optimally use the shortest path to P*^{s̅}*. When the packet arrives at P, P will strip the encapsulation and send the packet to W. However, if P has really failed, the packet will arrive at a neighbor of P (still addressed in the encapsulation to P*^{s̅}*), and since the neighbor has no repair path for a notvia address, it will drop the packet, hence avoiding a loop as described above.

It will further be seen that in the case of topologies where equal cost multipath routes (ECMP) are available or downstream path routes are available then these can be implemented accordingly. For example where a downstream path or loop free alternate (LFA) exists, a repairing node such as node S may use this in place of the notvia repair mechanism in appropriate circumstances. Similarly a router can use an ECMP repair in place of a notvia repair.

It can be seen that the approach described herein is applicable to a wide range of network configurations and circumstances. For example in the case of a multi-homed prefix (MHP), that is a prefix reachable via more than router in the network (and hence having "multiple homes") the approach can be implemented. FIG. 15 is a diagram showing a network including a multi-homed prefix Y. The network includes nodes S, P, B and C according to the connectivity described with reference to FIG. 7 above. In addition node S is connected to node Z 1000 and node B is connected to node V 1002 by respective paths 1004, 1006. An MHP Y, reference numeral 1008 is attached at nodes Z, P and V. In that case when node S discovers that node P has failed it needs to send MHP packets addressed to Y, which are normally reachable through P, to an alternate route which is still able to reach Y.

Referring to FIG. 16, which is a flow diagram illustrating the steps involved in forwarding MHP packets, in step 1102 node S runs its incremental SPF in the manner described above with reference to FIGS. 7 to 9, with node P failed, until all neighbors of P and an instance of MHP Y (which will be the second closest) is attached. Node S may identify when all appropriate nodes are reattached in any appropriate manner, for example by logging all MHPs during the base SPF and ensuring that all are reattached to the incremental SPF.

In block 1104 node S encapsulates the packet to the prefix attachment point identified as the closest alternate node. In the event that this is at node Z, which S can reach without using the node P, encapsulation is still required because the other nodes in the network will not be aware of the failure of node P, and may loop the packet back to S. In block 1106, therefore, node Z decapsulates the packet and forwards it to node X. It will be noted that node Z will include forwarding instructions that ensure that decapsulated packets for MHP Y must be forwarded along the connecting link 1010 to node Y to avoid potential looping in the event that nonetheless a lower cost route exists via node P.

In the event that the alternate router is node V, which node S reaches via node P and node B, node S must first repair the packet to node B using the normal notvia repair mechanism. Accordingly node S encapsulates the packet for node Y to B*^{p̅}*. When the packet reaches node B, node B decapsulates it and sees a packet destined for MHP Y. As node B will have established that node P has failed and will have carried out the same calculations as node S it will recognize that its closest attachment point for MHP Y is node V, following the same computation as were carried out at node S, and repairs it normally, encapsulating it to V.

In an alternative approach the prefix Y can be considered attached to a pseudo node N in turn connected to each of nodes B, V, Z in which case the respective interfaces are assigned notvia addresses and the repair path approach is described above implemented. It will be recognized that the concept of a "pseudo node" is well known to the skilled reader and provides a useful topological invention for treatment of MHPs and LANs such that detailed description is not required here.

The method described herein is also suitable for use in networks containing shared risk groups (SRG), that is groups of network components that are identified as having a probability of failing concurrently, for example because of a common physical location. FIG. 17 is a schematic network diagram illustrating a network including a shared risk group and common elements with FIG. 7 are commonly numbered. In addition the network includes a node P', 1200 and P", 1202 where P' is connected between nodes P and A and P" is connected to the other side of node A. Node F (1204) is connected to node P" and node G (1206) to node F. Nodes D and E, reference numerals 1208, 1210 respectively, are connected to nodes P' and P". Nodes J and K, reference numerals 1212, 1214, are connected to nodes D and E respectively. Node H, reference numeral 1216, is connected to node C.

Nodes P, P', P" form an SRG as a result of which, if it is assumed that all members of the SRG fail simultaneously, the scope of the notvia address indicates "notvia the whole SRG". In other words A*^{p̅}* = A {*̅^̅{̅p̅}̅*̅,̅^̅{̅*̅p̅*̅'̅}̅,̅^̅{̅*̅p̅*̅"̅}̅}̅. All routers calculate a notvia route to each of the notvia addresses of the interfaces that connect the SRG to the rest of the network, the calculation being made by simultaneously failing all members of the SRG, P, P', P" in a single incremental SPF. In order to identify an SRG each node retains records of nodes in the network belonging to respective SRGs.

Then, when a router that is adjacent to an SRG member makes a repair, it encapsulates the packet to the notvia address of the router which has the lowest cost route from the SRG to the destination. For example with reference to FIG. 17, where S receives a packet destined for node H which would normally be forwarded via nodes P and C, upon detection of the failure of the SRG, node S will encapsulate the packet to node C*^{p̅}* via appropriate connectivity (not shown). Similarly node S will encapsulate packets for node J to D*^{p̅}* and so forth.

It will be further noted that in addition to creating a notvia address for the SRG group, individual notvia addresses can also be formed for each member of the group. For example these could be used first which could be beneficial, for example, in the event that a member of the group comprised a single point of failure. In the same manner as for link failure protection, looping is avoided because repair paths are not stored for neighbor notvia addresses.

It will further be seen that the approach described herein can be implemented in relation to local area networks with reference to FIG. 18 which is a network diagram illustrating an LAN. Node S 1300 is connected to a pseudo node N, 1302 which itself connects to members of a LAN node P, 1304, node P', 1306 and P", 1308. Node P is connected to node B, 1310. The LAN can be treated as a special case of an SRG such that a notvia address is created against failure of all members of the LAN, termed here L. Then node S can provide repair paths for traffic for which it has an alternative path avoiding L. A more sophisticated approach can be adopted if L has a capability of testing members of the LAN in which case it can use notvia addresses only against known failed nodes on the LAN. As with SRG calculations only a single incremental SPF is required to calculate the notvia repair paths for group L.

When S discovers that it has lost connectivity to P, it is unsure whether the failure is its own interface to the LAN, the LAN itself, the LAN interface of P or the node P. With no further diagnostics S must repair traffic sent through P and B, to B notvia P,N (i.e. not via P and not via N), on the conservative assumption that both the entire LAN and P have failed. Destinations for which P is a single point of failure must as usual be sent to P using an address which avoids the interface by which P is reached from S, i.e. to P notvia N, similarly for routers P' and P". Each router that is connected to a LAN must, as usual, advertise one notvia address for each neighbor. In addition, each router on the LAN must advertise an extra address not via the pseudonode (N). In addition, each neighbor of a router connected to a LAN must advertise two notvia addresses, the usual one not via the neighbor and an additional one, not via either the neighbor or the pseudonode, exactly one address more than it would otherwise have advertised if this degree of connectivity had been achieved through the use of point to point links. As indicated above, to explicitly diagnose the failed network component S correlates the connectivity reports from P and one or more of the other routers on the LAN, in this case, P' and P". If it lost connectivity to P alone, it could deduce that the LAN was still functioning and that the fault lay with either P, or the interface connecting P to the LAN. It would then repair to B not via P (and P notvia N for destinations for which P is a signal point of failure) in the usual way. If S lost connectivity to more than one router on the LAN, it could conclude that the fault lay only with the LAN, and could repair to P, P' and P" notvia N, again in the usual way. If S fails, router A needs to be able to repair to every router on the LAN notvia S which it does in the usual way using the set of notvia S addresses. An alternative approach that provides less post-failure connectivity, but uses fewer addresses is to consider the LAN and all of its connected routers as a single SRG. Thus the address P not via the LAN (P1) would require P to be reached notvia any router connected to the LAN. In this case when S detected that P had failed it would send traffic reached via P and B to B notvia the LAN or any router attached to the LAN (i.e. to B1). Any destination only reachable through P would be addressed to P notvia the LAN or any router attached to the LAN (except of course P).

The approach can be used in relation to further implementations again. For example in the case of multi-cast packets, multi-cast traffic is repaired in a similar way to uni-cast. However the multi-cast forwarder is able to use the notvia address to which the multi-cast packet was addressed as an indication of the expected receiver interface and hence to correctly run the required reverse path forwarding (RPF) check.

Furthermore techniques such as stripping the tunnel header at a penultimate node to a node which will forward the unencapsulated packet to the desired repair end point can be adopted. Such an approach is described in co-pending patent application Ser No. 10/620,866, filed 15 July 2003, entitled "Method and Apparatus for Forwarding a Tunneled Packet in a Data Communications Network" of Michael Shand et al ("*Shand et al III*"), the entire contents of which are incorporated herein by reference for all purposes as if fully set forth herein.

It will further be seen that the method described herein can be implemented in relation to alternative routing protocols or forwarding paradigm. One such paradigm is MPLS (Multi Protocol Label Switching). MPLS is a protocol that is well known to the skilled reader and which is described in document "Multi Protocol Label Switching Architecture" which is available at the time of writing on the file "rfc3031.txt" in the directory "rfc" of the domain "ietf.org" on the World Wide Web. According to MPLS, a complete path for a source-destination pair is established, and values required for forwarding a packet between adjacent routers in the path together with headers or "labels" are pre-pended to the packet. The labels direct the packet to the correct interface and next hop. The labels precede the IP or other header allowing smaller outer headers.

The path for the source-destination pair, termed a Label Switched Path (LSP) can be established according to various different approaches. One such approach is Label Distribution Protocol (LDP) in which each router in the path sends its label to the next hop router on the path as determined from its IP routing table. Alternatively Resource Reservation Protocol (RSVP) can be invoked in which case, for example, a network administrator can engineer a path, providing strict source routing. In particular LDP will distribute labels for the notvia addresses in the usual manner. The notvia repair mechanism may therefore be used to provide repair paths in an MPLS network by first pushing the label which the repair point uses to forward the packet and then pushing the label corresponding to the notvia address needed to effect the repair. For example with reference to FIG. 7, where node S has a packet destined for node D that it would normally reach via nodes P and B, in the event that node P has failed, node S first pushes B's label for D and then the label that its next hop to B*^{p̅}* (node X) needs to reach B*^{p̅}*, i.e. [B_{d}, N_{Bp}]. Once again the notvia addresses have been propagated and are recognized, so that this approach is simply implemented. It will be noted that node S requires node B's label for D, B_{D}. This can be achieved in any appropriate manner, for example a directed LDP session. In order to obtain all appropriate labels node S can carry out a directed LDP session with each of node P's neighbors in the case of node repair or all of the egress routers in the case of an SRG. In the case of link repair node S will have node P's label for D P_{D} already as P is a neighbor node. Of course any appropriate manner for obtaining the repair point's label for the destination node can be adopted, for example, any appropriate approach described in *Swallow et al*.

Alternatively again the approach may be implemented using routing vector protocols such as distance or path vectors in which an advertising node advertises to all other nodes its full route or vector to a destination. In that case node P effectively advertises its notvia address by omitting vectors for each of its neighbors A*^{p̅}*, B*^{p̅}*, C*^{p̅}*, S*^{p̅}*. As a result, if P fails, there is no information at any node about how to reach B via P in any case such that it effectively has a notvia route selected via another node. As a result all nodes will compute routes which do not traverse node P.

It will be further seen that the method described can be implemented across a network in which all routers are enabled to compute notvia addresses and hence acting as participating nodes, in which only a subsection of routers are enabled or in which some routers are partially enabled. In the case that all routers are enabled and have repair address capability then clearly the method can be implemented very simply as described above. In the case that some routers are enabled and others are not then, when calculating notvia paths, non-enabled nodes are removed from the base topology. As a result no routes to a notvia address will ever be calculated that would attempt to traverse a non-enabled node such that non-enabled nodes will not receive notvia addresses which they are not equipped to deal with. It is possible that routers will be partially enabled, for example such that they are able to derive repair paths themselves and hence receive and forward packets to notvia addresses correctly but not themselves act as neighbor routers carrying out the encapsulation and forwarding steps as described above. In that case partially enabled routers can be included in the repair topology but will not themselves be able to instigate repairs.

The manner in which the method described herein is implemented in which software, firmware, hardware or any combination thereof and with any appropriate code changes as will be apparent to the skilled reader without the need for detailed description herein. For example extensions to the communication protocols such as the interior gateway protocol (IGP) may require extensions. In particular each enabled router that is directly connected to a protected network component will advertise a notvia address for that component in such a way that the association between the protected component and the notvia address can be determined by the other routers in the network as described above. Furthermore, enabled routers may advertise their capability for calculating and implementing notvia routes in the IGP together with the type of encapsulation that they support, for example IP in IP, GRE, L2TPv3 all of which will be well known to the skilled reader.

The addresses assigned as notvia addresses can be any appropriate addresses for example taken from a private address space for the network. Any appropriate encapsulation may be used to carry a notvia repair, for example IP in IP, GRE or L2TPv3. Similarly any alternate encapsulation scheme can be adopted as long as the encapsulating router and the router to which the encapsulated packet is addressed as repair point have a common ability to process the chosen encapsulation type.

As a result of the approaches described above, a simple procedure is applied according to which only a single level of encapsulation is required and which, because all nodes effectively compute shortest repair paths, it provides shortest repair paths for any failure. Furthermore it will be seen that decapsulated packets may "backtrack" that is, be forwarded to one or more nodes from which it has arrived via the tunnel but still be forwarded using normal forwarding, without looping towards the destination because the repair point is closer to the destination.

## Claims

1. A computer-implemented method, comprising:
initiating (202) a not-via approach for creating and storing repair path information for a first link between a first network node and a second network node in a network, in which not-via addresses are assigned to each node in the network, a not-via address indicating that a packet addressed to a node having the not-via address is to be delivered to the node with that address not via a node which is also indicated in the not-via address;
creating repair path information for the first link using the not-via approach by determining and storing (204) a list of network nodes that form a not-via repair path from the first network node to the second network node;
wherein the not-via repair path traverses the determined network nodes;
wherein the not-via repair path does not traverse the first link between the first network node and the second network node;
creating and storing (206, 208, 212) entries in a Forwarding Information Base, FIB, identifying not-via addresses for the network nodes that form the not-via repair path and that cause (a) packets directed to all addresses normally reachable through the first link to be encapsulated to the second node via the not-via repair path, (b) packets directed to a not-via address that is normally reachable through the first link to be encapsulated to the second node via the not-via repair path, unless the packets are directed to a not-via address that is in the list, in which case the packets are dropped;
repeating (210) the initiating, creating and storing the list and creating and storing entries for all other links of the first network node.

2. The method of claim 1, further comprising determining from entries in the FIB one or more pairs of mutually incompatible link failures;
advertising the one or more pairs as secondary shared risk link groups, using a routing protocol.

3. The method of claim 1, further comprising:
determining that a simultaneous failure of the first link and a second link has occurred;
determining that a first not-via repair path for the first link traverses the second link, and that a second not-via repair path for the second link traverses the first link;
determining that a packet drop count is greater than a specified threshold value, that a hold-down step is in use with respect to re-convergence, and that a loop-free convergence mechanism is in use;
in response to the ultimate determining step, sending an "Abandon All Hope" notification to logic implementing a routing protocol for forcing normal re-convergence to begin.

4. The method of claim 1, further comprising determining, for each neighbor node, a list of node pairs that are traversed by each not-via repair path;
performing a shortest path first (SPF) calculation rooted at a first node of each pair with a link to the second node removed;
determining whether a resulting path includes the first link.

5. The method of claim 1 further comprising sending network traffic destined for a not-via repair address via a corresponding not-via repair path.

6. The method of claim 1 in which the first network node comprises a neighbor node, acting as a repairing node, and wherein the method further comprises causing the repairing node to identify, for a destination address of the second network node, a not-via address as an encapsulation repair endpoint for a repair to the destination address in the event of non-availability of the second network node.

7. The method of claim 1 wherein the network includes multi-homed prefixes and wherein the method further comprises determining if an attachment point to a multi-homed prefix is reachable without a not-via repair path and encapsulating a packet to the attachment point if so; and
if an attachment point to the multi-homed prefix is only reachable via a not-via repair path, encapsulating traffic to the corresponding not-via address.

8. The method of claim 2 wherein the routing protocol is any of a link state routing protocol, MPLS routing protocol or distance vector routing protocol.

9. The method of claim 1, wherein the first link is in a shared risk link group.

10. The method of claim 1, further comprising:
determining one or more additional not-via repair paths by performing an SPF calculation rooted at each of the other nodes in the list;
creating and storing entries in the FIB that cause dropping packets directed to not-via addresses that are in the one or more additional not-via repair paths if the first network node is in the one or more additional not-via repair paths.

11. The method of claim 10, further comprising recursively repeating the steps of claim 10 for each of the one or more additional not-via repair paths.

12. An apparatus comprising:
one or more processors;
a network interface communicatively coupled to the one or more processors and configured to communicate one or more packet flows among the one or more processors in the network;
memory coupled to the processors and comprising a forwarding information base (FIB) for a routing protocol;
logic operable in a network as a first network node and coupled to the one or more processors and comprising one or more stored sequences of instructions which, when executed by the one or more processors, cause the one or more processors to perform all the steps of a method according to any preceding claim.

13. A computer readable storage medium comprising one or more stored sequences of instructions which, when executed by one or more processors of a first network node in a network, cause the one or more processors to perform all the steps of a method according to any of claims 1 to 11.

## Patentansprüche

1. Computerimplementiertes Verfahren, umfassend:
Einleiten (202) eines Not-Via-Ansatzes zum Erstellen und Speichern von Reparaturweginformationen für eine erste Verbindung zwischen einem ersten Netzknoten und einem zweiten Netzknoten in einem Netzwerk, in dem jedem Knoten in dem Netzwerk Not-Via-Adressen zugeordnet werden, wobei eine Not-Via-Adresse anzeigt, dass ein an einen Knoten, der die Not-Via-Adresse hat, adressiertes Paket an den Knoten mit dieser Adresse nicht über einen Knoten, der auch in der Not-Via-Adresse angegeben wird, zu liefern ist;
Erstellen von Reparturweginformationen für die erste Verbindung, die den Not-Via-Ansatz durch Ermitteln und Speichern (204) einer Liste von Netzknoten, die einen Not-Via-Reparaturweg von dem ersten Netzknoten zu dem zweiten Netzknoten bilden, nutzt;
wobei der Not-Via-Reparaturweg die ermittelten Netzknoten durchquert;
wobei der Not-Via-Reparaturweg die erste Verbindung zwischen dem ersten Netzknoten und dem zweiten Netzknoten nicht durchquert;
Erstellen und Speichern (206, 208, 212) von Einträgen in einer Forwarding Information Base, FIB, die Not-Via-Adressen für die Netzknoten bezeichnen, die den Not-Via-Reparaturweg bilden und die veranlassen, dass (a) Pakete, die an alle Adressen gerichtet sind, die normalerweise durch die erste Verbindung erreichbar sind, über den Not-Via-Reparaturweg zum zweiten Knoten gekapselt werden, (b) Pakete, die an eine Not-Via-Adresse gerichtet sind, die normalerweise durch die erste Verbindung erreichbar ist, über den Not-Via-Reparaturweg zu dem zweiten Knoten gekapselt werden, sofern die Pakete nicht an eine Not-Via-Adresse gerichtet sind, die in der Liste ist, wobei in diesem Fall die Pakete verworfen werden;
Wiederholen (210) des Einleitens, Erstellens und Speicherns der Liste und des Erstellens und Speicherns von Einträgen für alle anderen Verbindungen des ersten Netzknotens.

2. Verfahren nach Anspruch 1, das ferner Folgendes aufweist: Ermitteln von einem oder mehr Paaren miteinander unvereinbarer Verbindungsausfälle anhand von Einträgen in die FIB;
Bekanntmachen des einen oder der mehr Paare als sekundäre Verbindungsgruppen mit geteiltem Risiko unter Verwendung eines Routing-Protokolls.

3. Verfahren nach Anspruch 1, das ferner Folgendes aufweist:
Ermitteln, dass ein gleichzeitiger Ausfall der ersten Verbindung und einer zweiten Verbindung stattgefunden hat;
Ermitteln, dass ein erster Not-Via-Reparaturweg für die erste Verbindung die zweite Verbindung durchquert und dass ein zweiter Not-Via-Reparaturweg für die zweite Verbindung die erste Verbindung durchquert;
Ermitteln, dass eine Zahl der verworfenen Pakete größer als ein vorgegebener Schwellenwert ist, dass mit Bezug auf Rekonvergenz ein Hold-Down-Schritt in Gebrauch ist und dass ein kreisfreier Konvergenzmechanismus in Gebrauch ist;
als Reaktion auf den letzten Ermittlungsschritt Senden einer "Hoffnungslos"-Benachrichtigung an Logik, die ein Routingprotokoll implementiert, zum Erzwingen des Beginns einer normalen Rekonvergenz.

4. Verfahren nach Anspruch 1, das ferner Folgendes aufweist: Ermitteln einer Liste von Knotenpaaren, die von jedem Not-Via-Reparaturweg durchquert werden, für jeden Nachbarknoten;
Durchführen einer Shortest Path First (SPF) Berechnung, die an einem ersten Knoten jedes Paars gewurzelt ist, wobei eine Verbindung zu dem zweiten Knoten entfernt wurde;
Ermitteln, ob ein resultierender Pfad die erste Verbindung einschließt.

5. Verfahren nach Anspruch 1, das ferner das Senden von für eine Not-Via-Reparaturadresse bestimmtem Netzverkehr über einen entsprechenden Not-Via-Reparaturweg aufweist.

6. Verfahren nach Anspruch 1, bei dem der erste Netzknoten einen Nachbarknoten aufweist, der als Reparaturknoten fungiert, und wobei das Verfahren ferner das Veranlassen des Reparaturknotens zum Bezeichnen, für eine Zieladresse des zweiten Netzknotens, einer Not-Via-Adresse als einen Kapselungsreparaturendpunkt für eine Reparatur zu der Zieladresse im Fall der Nichtverfügbarkeit des zweiten Netzknotens aufweist.

7. Verfahren nach Anspruch 1, wobei das Netzwerk Multihoming-Präfixe beinhaltet und wobei das Verfahren ferner das Ermitteln, ob eine Anschlussstelle zu einem Multihoming-Präfix ohne einen Not-Via-Reparaturweg erreichbar ist, und, wenn ja, Kapseln eines Pakets zu der Anschlussstelle aufweist und,
wenn eine Anschlussstelle zu dem Multihoming-Präfix nur über einen Not-Via-Reparaturweg erreichbar ist, Kapseln des Verkehrs zu der entsprechenden Not-Via-Adresse.

8. Verfahren nach Anspruch 2, wobei das Routingprotokoll ein beliebiges von einem Link-State-Routingprotokoll, einem MPLS-Routingprotokoll oder einem Distance-Vector-Routingprotokoll ist.

9. Verfahren nach Anspruch 1, wobei die erste Verbindung in einer Verbindungsgruppe mit geteiltem Risiko ist.

10. Verfahren nach Anspruch 1, das ferner Folgendes aufweist:
Ermitteln von einem oder mehr zusätzlichen Not-Via-Reparaturwegen durch Durchführen einer SPF-Berechnung, die an jedem der anderen Knoten in der Liste gewurzelt ist;
Erstellen und Speichern von Einträgen in der FIB, die das Verwerfen von Paketen veranlassen, die an Not-Via-Adressen gerichtet sind, die in dem einen oder den mehr zusätzlichen Not-Via-Reparaturwegen sind, wenn der erste Netzknoten in dem einen oder den mehr zusätzlichen Reparaturwegen ist.

11. Verfahren nach Anspruch 10, das ferner das rekursive Wiederholen der Schritte von Anspruch 10 für jeden des einen oder der mehr zusätzlichen Not-Via-Reparaturwege aufweist.

12. Vorrichtung, umfassend:
einen oder mehr Prozessoren;
eine Netzschnittstelle, die kommunikativ mit dem einen oder den mehr Prozessoren gekoppelt ist und zum Übermitteln von einem oder mehr Paketflüssen unter dem einen oder den mehr Prozessoren in dem Netzwerk konfiguriert ist;
Speicher, der mit den Prozessoren gekoppelt ist und eine Forwarding Information Base (FIB) für ein Routinprotokoll aufweist;
Logik, die in einem Netzwerk als ein erstes Netzwerk funktionell ist und mit dem einen oder den mehr Prozessoren gekoppelt ist und eine oder mehr gespeicherte Anweisungssequenzen aufweist, die bei Ausführung durch den einen oder die mehr Prozessoren den einen oder die mehr Prozessoren zum Durchführen aller Schritte eines Verfahrens nach einem der vorhergehenden Ansprüche veranlasst.

13. Computerlesbares Speichermedium, das eine oder mehr gespeicherte Anweisungssequenzen aufweist, die bei Ausführung von einem oder mehr Prozessoren eines ersten Netzknotens in einem Netzwerk den einen oder die mehr Prozessoren zum Durchführen aller Schritte eines Verfahrens nach einem der Ansprüche 1 bis 11 veranlasst.

## Revendications

1. Procédé mis en oeuvre par ordinateur, comprenant :
le lancement (202) d'une approche de contournement pour créer et mémoriser des informations de chemin de réparation pour un premier lien entre un premier noeud de réseau et un second noeud de réseau dans un réseau, dans lequel des adresses de contournement sont attribuées à chaque noeud dans le réseau, une adresse de contournement indiquant qu'un paquet adressé à un noeud ayant l'adresse de contournement doit être délivré au noeud ayant cette adresse et non pas par un noeud qui est aussi indiqué dans l'adresse de contournement ;
la création d'informations de chemin de réparation pour le premier lien utilisant l'approche de contournement en déterminant et mémorisant (204) une liste de noeuds de réseau qui forment un chemin de réparation de contournement depuis le premier noeud de réseau jusqu'au second noeud de réseau ; dans lequel le chemin de réparation de contournement traverse les noeuds de réseau déterminés ;
dans lequel le chemin de réparation de contournement ne traverse pas le premier lien entre le premier noeud de réseau et le second noeud de réseau ;
la création et la mémorisation (206, 208, 212) d'entrées dans une base d'informations d'acheminement renvoi, FIB, qui identifie des adresses de contournement des noeuds de réseaux qui forment le chemin de réparation de contournement et qui conduisent à (a) une encapsulation des paquets adressés à toutes les adresses normalement joignables par le premier lien vers le second noeud par le biais du chemin de réparation de contournement, (b) une encapsulation des paquets adressés à une adresse de contournement normalement joignable par le premier lien vers le second noeud par le biais du chemin de réparation de contournement, à moins que les paquets soient adressées à une adresse de contournement qui se trouve dans la liste, auquel cas les paquets sont abandonnés ;
la répétition (210) du lancement, de la création et de la mémorisation de la liste et de la création et la mémorisation des entrées pour tous les autres liens du premier noeud de réseau.

2. Procédé selon la revendication 1, comprenant en outre la détermination à partir des entrées dans la FIB d'une ou de plusieurs paires de défaillances de lien mutuellement incompatibles ;
l'annonce des une ou plusieurs paires en tant que groupes de liens à risque partagé secondaires, en utilisant un protocole de routage.

3. Procédé selon la revendication 1, comprenant en outre :
la détermination qu'une défaillance simultanée du premier lien et d'un second lien s'est produite ;
la détermination qu'un premier chemin de réparation de contournement pour le premier lien traverse le second lien, et qu'un second chemin de réparation de contournement pour le second lien traverses le premier lien ;
la détermination qu'un compte d'abandons de paquets est supérieur à une valeur limite spécifiée, qu'une étape de maintien est utilisée relativement à la reconvergence, et qu'un mécanisme de convergence sans boucle est utilisé ;
en réponse à la dernière étape de détermination, l'envoi d'une notification "abandonner tout espoir" à la logique mettant en oeuvre un protocole de routage pour forcer le début d'une reconvergence normale.

4. Procédé selon la revendication 1, comprenant en outre la détermination, pour chaque noeud voisin, d'une liste de paires de noeuds qui sont traversés par chaque chemin de réparation de contournement ;
l'exécution d'un calcul du chemin le plus court en premier (SPF) partant d'un premier noeud de chaque paire avec un lien vers le second noeud supprimé ;
la détermination qu'un chemin résultant comporte ou non le premier lien.

5. Procédé selon la revendication 1, comprenant en outre l'envoi d'un trafic de réseau destiné à une adresse de réparation de contournement par le biais d'un chemin de réparation de contournement correspondant.

6. Procédé sur la revendication 1, dans lequel le premier noeud de réseau comprend un noeud voisin, faisant office de noeud de réparation, et le procédé faisant en sorte que le noeud de réparation identifie, pour une adresse destinataire du second noeud de réseau, une adresse de contournement en tant que point d'extrémité de réparation par encapsulation pour une réparation vers l'adresse destinataire en cas d'indisponibilité du second noeud de réseau.

7. Procédé selon la revendication 1, dans lequel le réseau comporte des préfixes à rattachements multiples et le procédé comprenant en outre la détermination qu'un point de jonction à un préfixe à rattachements multiples est joignable ou non sans chemin de réparation de contournement et l'encapsulation d'un paquet vers le point de jonction dans ce cas ; et
si un point de jonction au préfixe à rattachements multiples ne peut être joint que par un chemin de réparation de contournement, l'encapsulation du trafic vers l'adresse de contournement correspondante.

8. Procédé sur la revendication 2, dans lequel le protocole de routage est l'un quelconque d'un protocole de routage par état de lien, d'un protocole de routage MPLS ou d'un protocole de routage par vecteur de distance.

9. Procédé selon la revendication 1, dans lequel le premier lien se trouve dans un groupe de liens à risque partagé.

10. Procédé sur la revendication 1, comprenant en outre la détermination d'un ou de plusieurs chemins de réparation de contournement supplémentaires en effectuant un calcul SPF partant de chacun des autres noeuds dans la liste ;
la création et la mémorisation d'entrées dans la FIB qui conduisent à l'abandon de paquets adressés à des adresses de contournement qui se trouvent dans les un ou plusieurs chemins de réparation de contournement supplémentaires si le premier noeud de réseau se trouve dans les un ou plusieurs chemins de réparation de contournement supplémentaires.

11. Procédé selon la revendication 10, comprenant en outre la répétition récursive des étapes de la revendication 10 pour chacun des un ou plusieurs chemins de réparation de contournement supplémentaires.

12. Appareil comprenant :
un aux plusieurs processeurs ;
une interface réseau couplée par communication aux un ou plusieurs processeurs et configurée pour communiquer un ou plusieurs flux de paquets parmi les un ou plusieurs processeurs dans le réseau ;
une mémoire couplée aux processeurs et comprenant une base d'informations d'acheminement renvoi (FIB) d'un protocole de routage ;
une logique exploitable dans un réseau en tant que premier noeud de réseau et couplée aux un ou plusieurs processeurs et comprenant une ou plusieurs séquences mémorisées d'instructions qui, lorsqu'elles sont exécutées par les un ou plusieurs processeurs, amènent les un ou plusieurs processeurs à exécuter toutes les étapes d'un procédé selon l'une quelconque des revendications précédentes.

13. Support de mémorisation lisible par ordinateur comprenant une ou plusieurs séquences d'instructions mémorisées qui, lorsqu'elles sont exécutées par un ou plusieurs processeurs d'un premier noeud de réseau dans un réseau, amènent les un ou plusieurs processeurs à exécuter toutes les étapes d'un procédé selon l'une quelconque des revendications 1 à 11.
